# EUROPÄISCHE PATENTSCHRIFT

(11) **EP 2 657 405 B1**
(45) Veröffentlichungstag und Bekanntmachung des Hinweises auf die Patenterteilung: **06.11.2019**
(21) Anmeldenummer: 13161506.4
(22) Anmeldetag: 28.03.2013
(51) Int. Cl.: E01C 19/10, C10C 3/00, B09B 3/00, B01D 5/00, C10G 1/04

(54) **VERFAHREN UND VORRICHTUNG ZUR SEPARATION VON MINERALISCHEN FESTSTOFFEN AUS BITUMINÖSEN BAUMATERIALIEN**
METHOD AND DEVICE FOR SEPARATING MINERAL SOLIDS FROM BITUMINOUS BUILDING MATERIALS
PROCÉDÉ ET DISPOSITIF DE SÉPARATION DE MATIÈRES SOLIDES MINÉRALES DE MATÉRIAUX DE CONSTRUCTION EN BITUME

(30) Priorität: 25.04.2012 DE 102012103650; 23.07.2012 DE 102012106633
(43) Veröffentlichungstag der Anmeldung: 30.10.2013
(73) Patentinhaber: infraTest Prüftechnik GmbH, 74336 Brackenheim-Botenheim (DE)
(72) Erfinder: Rothenburger, Tobias, 74211 Leingarten (DE); Deutschländer, Uwe, 71638 Ludwigsburg (DE); Liebhart, Reinhold, 74080 Heilbronn (DE)
(74) Vertreter: Durm Patentanwälte PartG mbB

(56) Entgegenhaltungen:
- DE-A1- 2 611 251
- DE-A1-102008 053 902
- US-A- 4 222 851
- US-A- 4 311 561
- US-A- 4 448 667
- US-A- 4 539 097
- US-A- 4 699 709
- US-A- 4 765 885

## Beschreibung

Die vorliegende Erfindung betrifft ein Verfahren zur Separation von mineralischen Feststoffen aus bituminösen Baumaterialien, welche mineralische Feststoffe, Bitumen und Füllstoffe enthalten.

Ferner betrifft die vorliegende Erfindung eine Vorrichtung zur Separation von mineralischen Feststoffen aus bituminösen Baumaterialien, welche mineralische Feststoffe, Bitumen und Füllstoffe enthalten.

Die Offenbarung betrifft eine Abschöpfeinrichtung für eine eine Waschkammer umfassende Wascheinrichtung einer Vorrichtung zur Separation von mineralischen Feststoffen aus bituminösen Baumaterialien, welche mineralische Feststoffe, Bitumen und Füllstoffe enthalten.

Die Offenbarung betrifft eine Wascheinrichtung für eine Vorrichtung zur Separation von mineralischen Feststoffen aus bituminösen Baumaterialien, welche mineralische Feststoffe, Bitumen und Füllstoffe enthalten.

Ein typisches Beispiel für ein bituminöses Baumaterial ist Asphalt. Es handelt sich dabei um ein Gemisch aus mineralischen Feststoffen, beispielsweise Steine, Splitt und Sand, sowie Füllstoffen, wie insbesondere Gesteinsmehl, Hilfsstoffen und Bitumen. Bei Bitumen handelt es sich üblicherweise um einen Destillationsrückstand aus der Erdöldestillation. Ein wesentliches Qualitätskriterium für Asphalt ist sein Bitumengehalt. Dieser kann beispielsweise durch Auswaschen mittels eines Lösungsmittels ermittelt werden. Typischerweise werden chlorierte oder halogenierte Kohlenwasserstoffe, Pflanzenölester und dergleichen als Lösungsmittel verwendet. Die durch die Separation gewonnenen festen Bestandteile werden nach dem Auswaschen gewogen und durch Bestimmung der Differenz zur Masse der verwendeten Probe, auch als Probeneinwaage bezeichnet, der Bitumengehalt bestimmt.

Bei modernen Bitumenarten, die auch als modifizierte Bitumen bezeichnet werden, sind Zusatzstoffe zugesetzt, die der Verbesserung der technologischen Eigenschaften des Bitumen dienen, insbesondere um eine geringe Viskositätsänderung bei unterschiedlichen Temperaturen zu erreichen, ein Haftvermögen beziehungsweise eine Klebewirkung zu verbessern und eine Beständigkeit gegenüber Umwelteinflüssen zu erhöhen.

Ein typischer Zusatzstoff, um ein modifiziertes Bitumen zu erhalten, ist Kautschuk, und zwar sowohl natürlicher als auch synthetisch hergestellter Kautschuk. Dieser wird in unvernetzter oder vernetzter Form dem Bitumen zugemischt. Eine Zumischung mit Kautschuk kann insbesondere in Form einer Zugabe von Gummigranulat oder Gummipulver erfolgen, das beispielsweise aus recycelten Kraftfahrzeugreifen hergestellt wird.

Allerdings führt der dem Baumaterial, das auch als Baustoff bezeichnet wird, zur Modifikation des Bitumens zugesetzte Zusatzstoff, insbesondere in Form von Gummipartikeln, in bekannten Separationsvorrichtungen, wie sie beispielsweise aus der DE 43 08 149 C2 bekannt sind, zum Verstopfen von Trenn- und/oder Siebeinrichtungen derselben, was im Ergebnis zu einem Ausfall der in Form eines Analysegerätes ausgebildeten Vorrichtungen führt. Die beschriebenen Probleme sind bei am Markt verfügbaren Separationsvorrichtungen praktisch unvermeidlich, da die Zusatzstoffe, insbesondere in Form von Gummipartikeln, beim Kontakt mit dem zur Extraktion verwendeten Lösungsmittel eine erhebliche Volumenzunahme durch Quellen erfahren, was zudem mit einer starken Klebwirkung verbunden ist.

In der Fachwelt sind zwar Verfahren bekannt, mit denen in einem gesonderten Arbeitsschritt die Gummipartikel vor der eigentlichen Extraktion des Baumaterials abgetrennt werden können. Allerdings handelt es sich dabei um eine manuelle Tätigkeit mit offenen Gefäßen und einem mehrfachen Befüllen und Entleeren derselben mit einem Lösungsmittel. Aufgrund geänderter gesetzlicher Vorschriften ist jedoch die Verwendung von typischerweise eingesetzten Lösungsmitteln, insbesondere Trichlorethylen, außerhalb geschlossener Anlagen nicht mehr zulässig.

DE 26 11 251 A1 betrifft eine Vorrichtung und ein Verfahren zum Trennen von Komponenten eines festen Gemischs, indem mit einem Lösungsmittel gewaschen wird, welches in selektiver Weise ausgewählte Komponenten herauslöst. Insbesondere sollen Teer oder Bitumen aus Teersand und ölhaltigen Schieferablagerungen extrahiert werden.

In US 4,539,097 wird ein Verfahren zum Filtern eines Gemischs aus Lösungsmittel und Teersand offenbart. Das Verfahren umfasst einen Schritt des Aufteilens der Lösung in zwei Teilströme, wobei sich der gröbere Teersand im ersten Teilstrom befindet und der feinere Teersand im zweiten Teilstrom befindet.

In US 4,699,709 A wird ein Verfahren, um feste Bestandteile aus einem Bitumen-Lösungsmittel-Gemischs zu extrahieren offenbart.

In US 4,311,561 A wird eine Vorrichtung, um Bitumen aus Teersand zu extrahieren, offenbart, bei der mehrere einzeln abgeschlossene Extraktionskammern verwendet werden. Das Lösungsmittel wird durch Verdampfen zurückgewonnen.

In US 4,765,885 A wird ein Ansatz zur Rückgewinnung flüssiger Kohlenwasserstoffe aus Teersand offenbart.

Es ist daher eine Aufgabe der vorliegenden Erfindung, ein Verfahren und eine Vorrichtung der eingangs beschriebenen Art sowie eine Abschöpfeinrichtung und eine Wascheinrichtung der eingangs beschriebenen Art so zu verbessern beziehungsweise bereitzustellen, dass eine Separation von mineralischen Feststoffen aus bituminösen Baumaterialien, welche mineralische Feststoffe, durch Zusatzstoffe modifiziertes Bitumen und Füllstoffe enthalten, auf einfache und sichere Weise möglich ist.

Diese Aufgabe wird bei einem Verfahren der eingangs beschriebenen Art erfindungsgemäß gelöst durch:
- Waschen des Baumaterials in einem Lösungsmittel, wobei ein Baumaterial-Lösungsmittel-Gemisch gebildet wird und die Zusatzstoffe beim oder nach dem Waschen des Baumaterials mit dem Lösungsmittel aus und/oder auf diesem aufgeschwemmt werden,
- Abschöpfen der aufgeschwemmten Zusatzstoffe vom verbleibenden Feststoffe-Bitumen-Füllstoffe-Lösungsmittel-Gemisch,
- Separieren der mineralischen Feststoffe mit einer Korngröße, welche größer als ein Korngrößengrenzwert ist, aus dem Baumaterial-Lösungsmittel-Gemisch, wobei ein Bitumen-Füllstoffe-Lösungsmittel-Gemisch gebildet wird,
- Separieren der Füllstoffe mit einer Korngröße, welche kleiner als ein Korngrößengrenzwert ist, aus dem Bitumen-Füllstoffe-Lösungsmittel-Gemisch,
- Separieren des Bitumens aus dem verbleibenden Bitumen-Lösungsmittel-Gemisch durch Verdampfen des Lösungsmittels,
- Durchführen aller Verfahrensschritte in einer für Lösungsmittel dichten, geschlossenen Vorrichtung und
- Auffangen und wieder Verflüssigen des in allen Verfahrensschritten verdampften Lösungsmittels.

Ein derartiges Verfahren ermöglicht es, die in einem bituminösen Baumaterial enthaltenen Bestandteile zu separieren, ohne dass Lösungsmittel in die Umwelt gelangen kann. Dies wird insbesondere dadurch erreicht, dass die beschriebenen Verfahrensschritte in einem geschlossenen System durchgeführt werden, aus dem das verwendete Lösungsmittel nicht entweichen kann, und dass in den Verfahrensschritten verdampftes Lösungsmittel aufgefangen und wieder verflüssigt wird. Es kann dann wahlweise wieder zur Durchführung des Verfahrens eingesetzt werden, wenn es noch rein genug ist, oder zunächst gereinigt und dann wieder zur Durchführung des Verfahrens genutzt werden. Sollte es nicht mehr reinigbar sein, kann es beispielsweise, ohne in die Umwelt zu gelangen, aus dem Verfahren beziehungsweise dem hierfür vorgesehenen System entfernt werden.

Um den tatsächlichen Anteil der mineralischen Feststoffe und der Füllstoffe im Baumaterial möglichst genau bestimmen zu können, ist es günstig, wenn die mineralischen Feststoffe nach dem Separieren aus dem Baumaterial-Lösungsmittel-Gemisch und/oder die Füllstoffe nach dem Separieren aus dem Bitumen-Füllstoffe-Lösungsmittel-Gemisch getrocknet werden.

Auf besonders einfache und schnelle Weise lassen sich die mineralischen Feststoffe die Füllstoffe trocknen, wenn zum Trocknen derselben das Lösungsmittel verdampft wird.

Auf einfache und schnelle Weise lassen sich die Lösungsmittel verdampfen, wenn zum Verdampfen des Lösungsmittels die mineralischen Feststoffe und die Füllstoffe erhitzt werden. Dies kann beispielsweise mittels entsprechender Heizeinrichtungen erfolgen.

Günstig ist es, wenn das Bitumen-Füllstoffe-Lösungsmittel-Gemisch zum Separieren der Füllstoffe zentrifugiert wird. Man macht sich also für das Separieren oder Abtrennen der Füllstoffe aus dem genannten Gemisch die unterschiedlichen Dichten der im Gemisch enthaltenen Stoffe zu nutze.

Um das Zersetzen oder Zerfallen des Baumaterials zu beschleunigen, ist es insbesondere von Vorteil, wenn das Baumaterial beim Waschen mit dem Lösungsmittel erhitzt und/oder durch Rühren durchmischt wird. Auf diese Weise kann das Lösungsmittel deutlich schneller in das Baumaterial eindringen und Bestandteile aus diesem Herauslösen, insbesondere das die festen Bestandteile miteinander verklebende Bitumen.

Gemäß des erfindungsgemäßen Verfahrens kann vorgesehen sein, dass bei Baumaterialien, welche durch Zusatzstoffe modifiziertes Bitumen enthalten, die Zusatzstoffe beim oder nach dem Waschen des Baumaterials mit dem Lösungsmittel aus und/oder auf diesem aufgeschwemmt werden. Dies bedeutet insbesondere, dass die durch das Waschen mit dem Lösungsmittel freigesetzten oder freigelegten Zusatzstoffe an die Oberfläche des Lösungsmittels geschwemmt werden. Von der Oberfläche des Lösungsmittels können sie dann, ähnlich wie der sich auf der Milch bildende Rahm, abgeschöpft werden. Da sie dann nicht mehr in dem Baumaterial-Lösungsmittel-Gemisch enthalten sind, kann es folglich auch nicht mehr zu einem unerwünschten Verstopfen von Trenn- und Siebeinrichtungen kommen, die zur Durchführung der erfindungsgemäßen Verfahren genutzt werden. Vorzugsweise wird zum Waschen des Baumaterials ein Lösungsmittel verwendet, welches eine größere Dichte aufweist als die Zusatzstoffe. Die Verwendung eines solchen Lösungsmittels hat insbesondere den Vorteil, dass die Zusatzstoffe aufgrund ihrer geringeren Dichte auf dem Lösungsmittel aufschwimmen, von wo sie auf einfache Weise abgeschöpft werden können.

Um das Separieren der Zusatzstoffe noch weiter zu optimieren, ist es günstig, wenn zum Aufschwemmen derselben das Baumaterial-Lösungsmittel-Gemisch von unten mit einem Gas durchspült wird. Aufsteigende Gasblasen reißen dann die leichten Zusatzstoffe mit an die Oberfläche des Gemisches.

Besonders kostengünstig und umweltschonend lässt sich das Verfahren durchführen, wenn als Gas Luft verwendet wird.

Das Aufschwemmen der Zusatzstoffe kann weiter gefördert werden, indem vorzugsweise das Baumaterial-Lösungsmittel-Gemisch beim Durchspülen mit Gas durch Rühren durchmischt wird.

Ferner kann es vorteilhaft sein, wenn zum Ausbilden eines Dichtegradients im Baumaterial-Lösungsmittel-Gemisch in dieses, vorzugsweise von unten, mindestens einmal weiteres Lösungsmittel eingeleitet wird. Durch das Einleiten weiteren Lösungsmittels wird das Gemisch insgesamt verdünnt und die in diesem schwimmenden Bestandteile weiter voneinander getrennt. Außerdem wird das Aufschwemmen der eine geringere Dichte aufweisenden Zusatzstoffe erleichtert.

Günstig ist es, wenn nach dem mindestens einmaligen Einleiten des weiteren Lösungsmittels mindestens eine Zeitdauer gewartet wird. Dies ermöglicht es dem Gemisch, wieder in einen Gleichgewichtszustand überzugehen. Insbesondere kann es eine ganze Zeit lang dauern, bis durch Rühren im unteren Bereich des Gemisches befindliche Zusatzstoffteilchen an die Oberfläche des Gemisches aufsteigen. Um diesen Effekt zu optimieren, ist es vorteilhaft, wenn mehrfach weiteres Lösungsmittel eingeleitet und nach jedem Einleiten eine Wartezeit abgewartet wird. Denkbar ist es insbesondere, zwei- oder dreimal zusätzlich Lösungsmittel der Mischung zuzugeben.

Auf eine einfache Weise lassen sich die aufgeschwemmten Zusatzstoffe vom verbleibenden Feststoffe-Bitumen-Füllstoffe-Lösungsmittel-Gemisch trennen, wenn sie von diesem abschöpft werden. Abschöpfen kann insbesondere und auf einfache Weise mechanisch erfolgen durch entsprechende Einrichtungen, die das Abheben der aufgeschwemmten Zusatzstoffe vom verbleibenden Gemisch gestatten, also zum Beispiel mit einer Abschöpfeinrichtung.

Um möglichst viele der im Baumaterial enthaltenen Zusatzstoffe entfernen zu können, ist es günstig, wenn das Abschöpfen erst nach dem Durchspülen des Baumaterial-Lösungsmittel-Gemisches mit Gas erfolgt.

Ferner ist es vorteilhaft, wenn das Abschöpfen der Zusatzstoffe erst nach dem mindestens einmaligen Einleiten des weiteren Lösungsmittels erfolgt. Auch dies hat den Vorteil, dass ein noch größerer Anteil der im Gemisch enthaltenen Zusatzstoffe aufschwemmen und dann abgeschöpft werden kann.

Damit Trenn- und Separiereinrichtungen die zur Durchführung der erfindungsgemäßen Verfahren verwendet werden, nicht in der eingangs beschriebenen, unerwünschten Weise verstopfen können, ist es vorteilhaft, wenn die mineralischen Feststoffe aus dem Baumaterial-Lösungsmittel-Gemisch und die Füllstoffe aus dem Bitumen-Füllstoffe-Lösungsmittel-Gemisch erst nach dem Abschöpfen der Zusatzstoffe separiert werden. Sind die Zusatzstoffe, die ein Verkleben der Trenn- und Separiereinrichtungen bewirken können, nicht mehr im Gemisch enthalten, kann so auf einfache Weise ein Verstopfen vermieden werden. Dieses Problem tritt typischerweise nicht bei Baumaterialien auf, die herkömmliches, nicht modifiziertes, das heißt nicht mit Kautschuk oder aus Kautschuk hergestellten Materialien versetztes Bitumen enthalten. Grundsätzlich kann nach dem Abtrennen oder Abschöpfen der Zusatzstoffe eine weitere Auftrennung der verbliebenen Bestandteile des Baumaterials in herkömmlicher Weise erfolgen.

Vorteilhafterweise werden alle vorgenannten Verfahrensschritte in Abhängigkeit des zu separierenden Baumaterials bis zu 10mal durchgeführt werden. Vorzugsweise werden drei bis sieben Zyklen durchgeführt, in denen ein Teil oder sämtliche der vorgenannten Verfahrensschritte durchgeführt werden.

Um den Gewichtsanteil der Zusatzstoffe im Baumaterial möglichst genau bestimmen zu können, ist es vorteilhaft, wenn die Zusatzstoffe nach dem Abschöpfen getrocknet werden.

Vorteilhaft ist es, wenn die Zusatzstoffe unter Unterdruck, Umgebungsdruck und/oder Unterdruck getrocknet werden. Denkbar ist es insbesondere, unterschiedliche Drücke in einem Trocknungszyklus zu verwenden, das heißt dass der beim Trocknen herrschende Druck zeitabhängig variieren kann.

Vorteilhaft ist es, wenn die Zusatzstoffe in mehreren Trocknungszyklen getrocknet werden und wenn in einem Trocknungszyklus die Zusatzstoffe etwa gleich lang unter Unterdruck und unter Überdruck getrocknet werden. Beispielsweise kann ein Trocknungszyklus fünf Minuten dauern, wobei entweder zunächst die halbe Zeit unter Unterdruck oder unter Überdruck eine Trocknung stattfindet, insbesondere bei gleichzeitigem Erhitzen der Zusatzstoffe, oder umgekehrt.

Günstig ist es, wenn nach dem Separieren der Füllstoffe die Absorption des Bitumen-Lösungsmittel-Gemisches gemessen wird. Wird die Absorption des Gemisches verglichen mit der Absorption des reinen Lösungsmittels, das zur Durchführung des Verfahrens verwendet wird, kann so auf einfache Weise bestimmt werden, ob das Bitumen aus dem ursprünglich eingesetzten Baumaterial-Lösungsmittel-Gemisch im Wesentlichen vollständig entfernt wurde.

Des Weiteren kann es vorteilhaft sein, wenn das aufgefangene und wieder verflüssigte Lösungsmittel durch ein Wasserbad geleitet wird. Auf diese Weise können insbesondere bei einer Destillation des Lösungsmittels zur Reinigung desselben entstandene Chlorid-Ionen gebunden werden, um eine mögliche Übersäuerung des reinen Lösungsmittels zu vermeiden. Das durch das Wasserbad durchgeleitete Lösungsmittel kann dann gegebenenfalls wieder zur Durchführung des Verfahrens weiterverwendet werden.

Ferner ist es günstig, wenn ein pH-Wert des aufgefangenen und wieder verflüssigten Lösungsmittels gemessen wird. Auf diese Weise kann eine sogenannte "Alkalitätsreserve" des Lösungsmittels bestimmt werden, das heißt ob es zur Durchführung des Verfahrens weiter eingesetzt werden kann oder nicht. Da ein Übersäuern des Lösungsmittels in jedem Fall vermieden werden sollte, kann so sichergestellt werden, dass nur zur Durchführung der beschriebenen Verfahren geeignetes Lösungsmittel eingesetzt wird.

Vorzugsweise wird als Lösungsmittel Trichlorethylen, Trichlorethan, n-Hexan, Aceton, Ethylacetan, Toluol, Methylenchlorid und/oder ein aus nachwachsenden Rohstoffen hergestelltes Lösungsmittel, insbesondere Capryl-Säure, Methylester oder Octansäure-Methylester, verwendet. Die genannten Lösungsmittel sind insbesondere hervorragend geeignet, um bituminöse Baumaterialien in ihre Bestandteile zu zerlegen, insbesondere indem sie das im Baumaterial enthaltene Bitumen lösen, welches zur Verbindung der im Baumaterial enthaltenen Feststoffe genutzt wird.

Die eingangs gestellte Aufgabe wird ferner mittels eine Abschöpfeinrichtung der eingangs beschriebenen Art gelöst, welche ausgebildet ist zum Abschöpfen von in der ersten Waschkammer aufgeschwemmten Zusatzstoffen und ein um eine Schöpferdrehachse rotierbares Schöpfelement umfasst.

Mit einer solchen Abschöpfeinrichtung ist es auf einfache Weise möglich, Zusatzstoffe aus einem Baumaterial-Lösungsmittel-Gemisch abzuschöpfen, die an die Oberfläche des Gemisches aufgeschwemmt wurden. Eine solche Abschöpfeinrichtung kann insbesondere vollautomatisch betrieben werden, so dass sie geeignet ist, in einem geschlossenen System Zusatzstoffe aus dem durch Waschen mittels des Lösungsmittels aufgeschlossenen Baumaterials zu entfernen.

Vorzugsweise verläuft die Schöpferdrehachse parallel zur Schwerkraftrichtung. Grundsätzlich ist es auch denkbar, dass sie auch etwas geneigt zur Schwerkraftrichtung verläuft.

Um den Abschöpfvorgang automatisch durchführen zu können, ist es günstig, wenn die Abschöpfeinrichtung einen Antrieb zum Drehen des Schöpfelements umfasst.

Aufgeschwemmte Zusatzstoffe lassen sich von einem Baumaterial-Lösungsmittel-Gemisch auf einfache und sichere Weise entfernen, ohne das Gemisch zusätzlich und in unerwünschter Weise aufzuwühlen, wenn das Schöpfelement eine schraubenförmig gewundene Schöpfwand umfasst. Mit anderen Worten kann das Schöpfelement eine Schöpfwand in Form einer Helix aufweisen, die eine vom Gemisch weg weisende Schöpffläche umfasst, auf welcher die Zusatzstoffe aufgleiten können beziehungsweise nach dem Abschöpfen aufliegen.

Um das Trocknen der Zusatzstoffe zu erleichtern, ist es vorteilhaft, wenn die Schöpfwand mindestens teilweise durch ein Schöpfsieb gebildet wird. Vorzugsweise ist sie vollständig durch ein Schöpfsieb gebildet. Durch dieses kann insbesondere Lösungsmittel abtropfen, wodurch ein Trocknungsvorgang der Zusatzstoffe signifikant beschleunigt wird.

Konstruktiv besonders einfach ausbilden lässt sich die Abschöpfeinrichtung, wenn das Schöpfelement eine innere Hülse und eine äußere Hülse umfasst, welche jeweils konzentrisch zur Schöpferdrehachse angeordnet sind und jeweils eine in Richtung auf die jeweils andere Hülse hin geöffnete Nut zum Aufnehmen innerer und äußerer Ränder der Schöpfwand aufweisen. Die Nuten können beispielsweise in Wände der Hülsen gefräst oder durch Aufsetzen parallel zueinander verlaufender, spiralförmig die Schöpferdrehachse umgebende Vorsprünge ausgebildet sein, welche etwas voneinander in einer Richtung parallel zur Schöpferdrehachse beabstandet sind. Diese Ausgestaltung ermöglicht es insbesondere, die Schöpfwand aus einem ebenen Material zu bilden, und zwar aus einem Kreisringsegment. Die sphärisch geformte Schöpffläche kann dann insbesondere dadurch erzeugt werden, dass das Kreisringsegment in die beiden Nuten eingeschoben und dabei verformt wird. Ist das Material, aus dem die Schöpfwand gebildet ist, etwas flexibel oder elastisch verformbar, kann so auf einfache Weise eine sphärische Schöpffläche ausgebildet werden. Ferner kann so auch eine ideale Abdichtung zwischen der Schöpfwand und den Hülsen erreicht werden, um das Durchschlüpfen oder Durchfallen bereits abgeschöpfter Zusatzstoffe in das Baumaterial-Lösungsmittel-Gemisch zurück zu vermeiden. Außerdem ist eine einfache Reinigung der Schöpfwand möglich, beispielsweise durch Herausziehen derselben aus den Nuten der beiden Hülsen.

Um möglichst eine große Menge der Zusatzstoffe abschöpfen zu können, ist es günstig, wenn die Schöpfwand sich über einen Umfangswinkel von mindestens 360° erstreckt.

Die eingangs gestellte Aufgabe wird ferner bei einer Wascheinrichtung der eingangs beschriebenen Art erfindungsgemäß dadurch gelöst, dass sie eine der vorstehend beschriebenen Abschöpfeinrichtungen umfasst.

Mit einer derartigen Wascheinrichtung ist es auf einfache Weise möglich, modifiziertes Bitumen enthaltende Baumaterialien zu separieren beziehungsweise aufzuschließen, ohne Gefahr laufen zu müssen, dass insbesondere Kautschuk enthaltende oder aus Kautschuk hergestellte Zusatzstoffe Trenn- und/oder Siebeinrichtungen der Separationsvorrichtung verstopfen oder verkleben können.

Die eingangs gestellte Aufgabe wird außerdem bei einer Vorrichtung der eingangs beschriebenen Art erfindungsgemäß dadurch gelöst, dass diese mindestens eine erste und/oder eine zweite Wascheinrichtung zum Waschen des Baumaterials in einem Lösungsmittel umfasst, wobei ein Baumaterial-Lösungsmittel-Gemisch gebildet wird, dass sie eine erste Trenneinrichtung zum Separieren der mineralischen Feststoffe mit einer Korngröße, welche größer als ein Korngrößengrenzwert ist, aus dem Baumaterial-Lösungsmittel-Gemisch umfasst, wobei ein Bitumen-Füllstoffe-Lösungsmittel-Gemisch gebildet wird, dass sie eine zweite Trenneinrichtung zum Separieren der Füllstoffe mit einer Korngröße, welche kleiner als ein Korngrößengrenzwert ist, aus dem Bitumen-Füllstoffe-Lösungsmittel-Gemisch umfasst, dass sie eine dritte Trenneinrichtung zum Separieren des Bitumens aus dem verbleibenden Bitumen-Lösungsmittel-Gemisch durch Verdampfen des Lösungsmittels umfasst und dass sie eine Lösungsmittel-Rückgewinnungseinrichtung zum Auffangen und wieder Verflüssigen des in allen Einrichtungen der Vorrichtung verdampften Lösungsmittels umfasst, wobei die Vorrichtung in Form eines für das Lösungsmittel dichten, geschlossenen Systems ausgebildet ist.

Mit einer solchen Vorrichtung lassen sich auf einfache und sichere sowie umweltverträgliche Weise mineralische Feststoffe aus bituminösen Baumaterialen separieren. Insbesondere wird den gesetzlichen Vorschriften entsprechend vermieden, dass beim Betrieb der Vorrichtung eingesetzte Lösungsmittel in nicht zulässiger Weise in die Umgebung der Vorrichtung gelangen und die Umwelt belasten und schädigen können. Ferner ist es insbesondere möglich, mit einer solchen Vorrichtung eines der vorstehend beschriebenen Verfahren durchzuführen.

Günstig ist es, wenn die erste Wascheinrichtung eine erste Heizeinrichtung und/oder wenn die zweite Wascheinrichtung eine zweite Heizeinrichtung umfasst zum Erhitzen eines Innenraumes derselben. Mit anderen Worten können von den Wascheinrichtungen definierte Innenräume erwärmt beziehungsweise erhitzt werden, um insbesondere das Separieren des bituminösen Baumaterials in vorteilhafter Weise zu ermöglichen.

Um Lösungsmittel in gewünschter Menge in die erste und/oder zweite Wascheinrichtung leiten zu können, ist es vorteilhaft, wenn die Vorrichtung einen Lösungsmittelvorratsbehälter umfasst, welcher mit der ersten und/oder zweiten Wascheinrichtung in Fluidverbindung steht.

Ferner ist es vorteilhaft, wenn die erste, die zweite und/oder die dritte Trenneinrichtung eine Heizeinrichtung umfassen. So können aus dem Baumaterial separierte Bestandteile desselben auf einfache Weise getrocknet werden, insbesondere durch Verdampfen des zum Aufschließen des Baumaterials eingesetzten Lösungsmittels.

Die Handhabung der Vorrichtung lässt sich insbesondere dadurch verbessern, dass die erste Wascheinrichtung eine erste Waschkammer und einen in der ersten Waschkammer angeordneten ersten Baumaterialaufnahmebehälter umfasst und/oder dass die zweite Wascheinrichtung eine zweite Waschkammer und einen in der zweiten Waschkammer angeordneten zweiten Baumaterialaufnahmebehälter umfasst. Die Baumaterialaufnahmebehälter können relativ zur jeweiligen Waschkammer feststehend oder bewegbar angeordnet sein, insbesondere rotier- oder verschwenkbar, um ein Aufschließen des zu analysierenden Baumaterials mittels des Lösungsmittels zu verbessern.

Vorteilhaft ist es, wenn der erste Baumaterialaufnahmebehälter um eine parallel zur Schwerkraftrichtung verlaufende Drehachse rotierbar angeordnet ist und wenn der zweite Baumaterialaufnahmebehälter um eine quer zur Schwerkraftrichtung verlaufende Schwenkachse verschwenkbar angeordnet ist. Insbesondere kann so der erste Baumaterialaufnahmebehälter eine rotationssymmetrische oder im Wesentlichen rotationssymmetrische Grundform aufweisen, beispielsweise in Form eines einen Boden und eine umlaufende Wand aufweisenden Zylinders, welcher oben offen ist. Der zweite Baumaterialaufnahmebehälter kann insbesondere in Form einer Wanne ausgebildet sein, welche durch einen parallel zu seiner Längsachse aufgeschnittenen Zylinder gebildet wird.

Besonders einfach lassen sich Feststoffe aus dem Baumaterialgemisch abtrennen, wenn die erste Trenneinrichtung in Form einer Siebeinrichtung ausgebildet ist. Durch die Siebeinrichtung können alle Bestandteile des Baumaterials hindurch gelangen, die kleiner als eine Maschenweite der Siebeinrichtung sind. Vorzugsweise wird diese so gewählt, dass alle im Lösungsmittel gelösten Stoffe sowie die Füllstoffe durch die Siebeinrichtung hindurch gelangen können, nicht jedoch die Feststoffe.

Besonders einfach wird der Aufbau der Siebeinrichtung, wenn diese mindestens ein Sieb mit einer Maschenweite umfasst, welche einem Korngrößengrenzwert entspricht.

Um wie beschrieben die Feststoffe mit der Siebeinrichtung in gewünschter Weise zurückhalten zu können, ist es günstig, wenn der Korngrößengrenzwert in einem Bereich von etwa 0,05 mm bis etwa 0,10 mm liegt. Vorzugsweise beträgt der Korngrößengrenzwert etwa 0,063 mm.

Um die im Baumaterial enthaltenen Feststoffe in beiden Wascheinrichtungen abtrennen zu können, ist es vorteilhaft, wenn der erste Baumaterialaufnahmebehälter ein erstes Sieb und wenn der zweite Baumaterialaufnahmebehälter ein zweites Sieb umfasst.

Günstig ist es, wenn der erste Baumaterialaufnahmebehälter einen sich quer zur Drehachse verlaufenden Boden umfasst und wenn das erste Sieb mindestens einen Teil des Bodens bildet. Vorzugsweise wird der gesamte Boden des ersten Baumaterialaufnahmebehälters durch das erste Sieb gebildet. So können alle Bestandteile des Baumaterials, die kleiner sind als der Korngrößengrenzwert, ohne weiteres durch das erste Sieb hindurch gelangen.

Vorteilhaft ist, wenn der zweite Baumaterialaufnahmebehälter eine sich konzentrisch zur Schwenkachse verlaufende Behälterwand umfasst und wenn das zweite Sieb mindestens einen Teil der Behälterwand bildet. Wie bereits dargelegt, kann die Behälterwand in Form eines Teils einer Wand eines Hohlzylinders ausgebildet sein. Dies ermöglicht es, das Baumaterial im zweiten Baumaterialaufnahmebehälter durch Verschwenken desselben um die Schwenkachse hin und her zu verschwenken, um das Baumaterial möglichst gut mit Lösungsmittel zu durchtränken.

Das Aufschließen des Baumaterials kann weiter verbessert werden, wenn die erste Wascheinrichtung eine Rühreinrichtung umfasst.

Besonders einfach lässt sich die Rühreinrichtung konstruieren, wenn sie mindestens ein um eine parallel zur Schwerkraftrichtung verlaufende Rühreinrichtungsdrehachse drehbares Rührelement umfasst. Dieses kann ein, zwei oder drei flügelartige Elemente umfassen, die im Bereich des Bodens im Inneren des ersten Baumaterialaufnahmebehälters das darin enthaltene Baumaterial durchmischen können.

Um die Vorrichtung automatisch betreiben zu können, ist es günstig, wenn sie einen ersten Antrieb zum Drehen des Rührelements umfasst.

Gemäß der Erfindung kann vorgesehen sein, dass die Vorrichtung eine mit der ersten und/oder zweiten Wascheinrichtung in Fluidverbindung stehende Belüftungseinrichtung umfasst, welche ausgebildet ist zum Erzeugen eines Unter- und/oder eines Überdrucks jeweils bezogen auf einen in der Umgebung der Vorrichtung herrschenden Umgebungsdruck. Ferner kann sie insbesondere auch dazu genutzt werden, Gase, insbesondere Luft, in eine oder beide Wascheinrichtungen einzublasen. Auf besonders einfache Weise lassen sich Füllstoffe mit einer Korngröße, welche kleiner als der Korngrößengrenzwert ist, aus dem Bitumen-Füllstoffe-Lösungsmittel-Gemisch separieren, wenn die zweite Trenneinrichtung eine Zentrifuge umfasst. Vorzugsweise handelt es sich dabei um eine Röhrenzentrifuge mit Vollmanteltrommel.

Vorteilhaft ist es, wenn die erste Waschkammer an ihrem bezogen auf die Schwerkraftrichtung unteren Ende oder im Bereich dieses Endes einen Lösungsmitteleinlass umfasst, welcher mit dem Lösungsmittelvorratsbehälter in Fluidverbindung steht. Beispielsweise kann so bei Bedarf reines Lösungsmittel aus dem Lösungsmittelvorratsbehälter in die erste Waschkammer eingeleitet werden, um insbesondere, wie oben beschrieben, ein Aufschwemmen der im Baumaterial enthaltenen Zusatzstoffe zu forcieren.

Des Weiteren ist es günstig, wenn die erste Waschkammer an ihrem bezogen auf die Schwerkraftrichtung unteren Ende oder im Bereich dieses Endes einen Gaseinlass umfasst, welcher mit der Belüftungseinrichtung in Fluidverbindung steht. Ein solcher Gaseinlass ermöglicht es, in die erste Waschkammer von unten ein Gas, insbesondere Luft einströmen zu lassen, um, wie oben beschrieben, das Aufschwemmen der im Baumaterial enthaltenen Zusatzstoffe zu verbessern.

Auf einfache Weise ausbilden und steuern lässt sich die Belüftungseinrichtung, wenn diese eine Pumpe umfasst. Sie kann insbesondere als Druck- und/oder Vakuumpumpe ausgebildet sein.

Besonders vorteilhaft ist es, wenn die erste Wascheinrichtung ausgebildet ist in Form einer der oben beschriebenen Wascheinrichtungen. Sie ermöglicht es insbesondere aufgrund der von der Wascheinrichtung umfassten Abschöpfeinrichtung, auf dem Lösungsmittel in der ersten Waschkammer aufgeschwemmte Zusatzstoffe einfach und sicher vollautomatisch zu separieren, ohne dass dabei Lösungsmittel aus der Vorrichtung heraus gelangt.

Günstigerweise ist die Abschöpfeinrichtung in Form einer der oben beschriebenen vorteilhaften Ausführungsformen von Abschöpfeinrichtungen ausgebildet. Die Vorrichtung weist dann insbesondere auch die oben im Zusammenhang mit den bevorzugten Ausführungsformen der Abschöpfeinrichtungen beschriebenen Vorteile auf.

Gemäß einer weiteren bevorzugten Ausführungsform der Erfindung kann vorgesehen sein, dass die erste Wascheinrichtung eine Lösungsmittelfüllstandsmesseinrichtung umfasst zum Messen eines Füllstands des Lösungsmittels in der ersten Waschkammer. Die Lösungsmittelfüllstandsmesseinrichtung ermöglicht es insbesondere, den Füllstand des Lösungsmittels in der ersten Waschkammer zu überwachen. Insbesondere kann so gezielt die Zugabe weiteren Lösungsmittels gesteuert werden, und zwar durch Messen des Füllstands und entsprechendes Regeln eines weiteren Zu- und/oder Abflusses von Lösungsmittel in die erste Wascheinrichtung hinein oder aus dieser heraus.

Auf besonders einfache Weise lässt sich ein Füllstand des Lösungsmittels bestimmen, wenn die Lösungsmittelfüllstandsmesseinrichtung mindestens einen Füllstandssensor umfasst. Es können zwei, drei, vier oder mehr Füllstandssensoren vorgesehen sein, um das Erreichen des Füllstands des Lösungsmittels in der ersten Wascheinrichtung zu detektieren, wenn das erfindungsgemäße Verfahren insbesondere vorsieht, das Lösungsmittel in unterschiedlichen Verfahrensschritten auf unterschiedliche Niveaus in der ersten Wascheinrichtung anzuheben oder abzusenken.

Ferner ist es vorteilhaft, wenn eine optische Sensoreinrichtung in einer Verbindungsleitung zwischen der zweiten und der dritten Trenneinrichtung angeordnet ist zum Messen einer Absorption des Bitumen-Lösungsmittel-Gemisches. Auf diese Weise kann insbesondere automatisch bestimmt werden, wie hoch der Bitumen-Gehalt im Gemisch ist. Abhängig von einem so bestimmten Wert kann dann insbesondere gesteuert werden, ob noch ein weiterer Waschvorgang des in der ersten Wascheinrichtung befindlichen Baumaterials vorgenommen werden muss oder nicht.

Gemäß einer weiteren bevorzugten Ausführungsform der Erfindung kann vorgesehen sein, dass die Vorrichtung ein Wasserbad umfasst, welches einerseits mit der Lösungsmittel-Rückgewinnungseinrichtung und andererseits mit dem Lösungsmittelvorratsbehälter in Fluidverbindung steht. Wie bereits oben beschrieben, kann durch das Wasserbad eine Übersäuerung des reinen Lösungsmittels verhindert werden durch Binden von bei einer Destillation des Lösungsmittels entstandener Chlorid-Ionen.

Ferner ist es vorteilhaft, wenn die Vorrichtung eine pH-Wert-Messeinrichtung zum Messen des pH-Werts des Lösungsmittels umfasst, welche einerseits mit der Lösungsmittel-Rückgewinnungseinrichtung und andererseits mit dem Lösungsmittelvorratsbehälter in Fluidverbindung steht. Die pH-Wert-Messeinrichtung ermöglicht es somit, insbesondere im kontinuierlichen Betrieb der Vorrichtung einen pH-Wert des Lösungsmittels zu bestimmen, um so einer Übersäuerung des Lösungsmittels gegebenenfalls entgegenwirken zu können.

Gemäß einer weiteren bevorzugten Ausführungsform der Erfindung kann vorgesehen sein, dass die Vorrichtung eine Rotationsverdampfereinrichtung zum Entfernen von Lösungsmittel aus dem von der dritten Trenneinrichtung abgeschiedenen Bitumen-Lösungsmittel-Gemisch umfasst, welche Rotationsverdampfereinrichtung mit der dritten Trenneinrichtung und mit der Lösungsmittel-Rückgewinnungseinrichtung in Fluidverbindung steht. Die Rotationsverdampfereinrichtung ist vorzugsweise ausgebildet, um das im Bitumen-Lösungsmittel-Gemisch noch enthaltene Lösungsmittel vollständig aus dem Gemisch auszutreiben und so den Anteil des Bitumens im Baumaterial möglichst genau zu bestimmen.

Um die Vorrichtung im Wesentlichen vollautomatisch betreiben zu können, ist es vorteilhaft, wenn diese eine Steuer- und/oder Regelungseinrichtung zum Steuern und/oder Regeln der Vorrichtung umfasst, um eines der oben beschriebenen erfindungsgemäßen Verfahren automatisch durchzuführen. Mit einer solchen Vorrichtung kann insbesondere ein bituminöses Baumaterial in definierter Weise in seine Bestandteile zerlegt werden, um deren Anteil, insbesondere deren Gewichtsanteil, am Baumaterial zu bestimmen.

Ferner ist es günstig, wenn eine der oben beschriebenen Vorrichtungen zur Durchführung eines der oben beschriebenen Verfahren verwendet wird. Wie bereits dargelegt, lassen sich so auf einfache, sichere und umweltverträgliche Weise die Bestandteile eines bituminösen Baumaterials automatisch voneinander trennen, um deren Anteil im Baumaterial durch einfache Gewichtsmessung zu ermitteln.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines ersten Ausführungsbeispiels einer Vorrichtung zur Separation von mineralischen Feststoffen aus bituminösen Baumaterialien;
- Figur 2:: eine vergrößerte Ansicht einer schematischen Darstellung einer ersten Wascheinrichtung der in Figur 1 dargestellten Vorrichtung;
- Figur 3:: eine teilweise geschnittene, perspektivische Ansicht eines zweiten Ausführungsbeispiels einer ersten Wascheinrichtung;
- Figur 4:: eine teilweise geschnittene Seitenansicht der in Figur 3 dargestellten ersten Wascheinrichtung;
- Figur 5:: eine vergrößerte Ausschnittsansicht der in Figur 4 dargestellten ersten Wascheinrichtung;
- Figur 6:: eine schematische Darstellung eines weiteren Ausführungsbeispiels einer Vorrichtung zur Separation von mineralischen Feststoffen aus bituminösen Baumaterialien umfassend zwei Wascheinrichtungen;
- Figur 7:: eine schematische Darstellung eines weiteren Ausführungsbeispielsweise einer Vorrichtung zur Separation von mineralischen Feststoffen aus bituminösen Baumaterialien; und

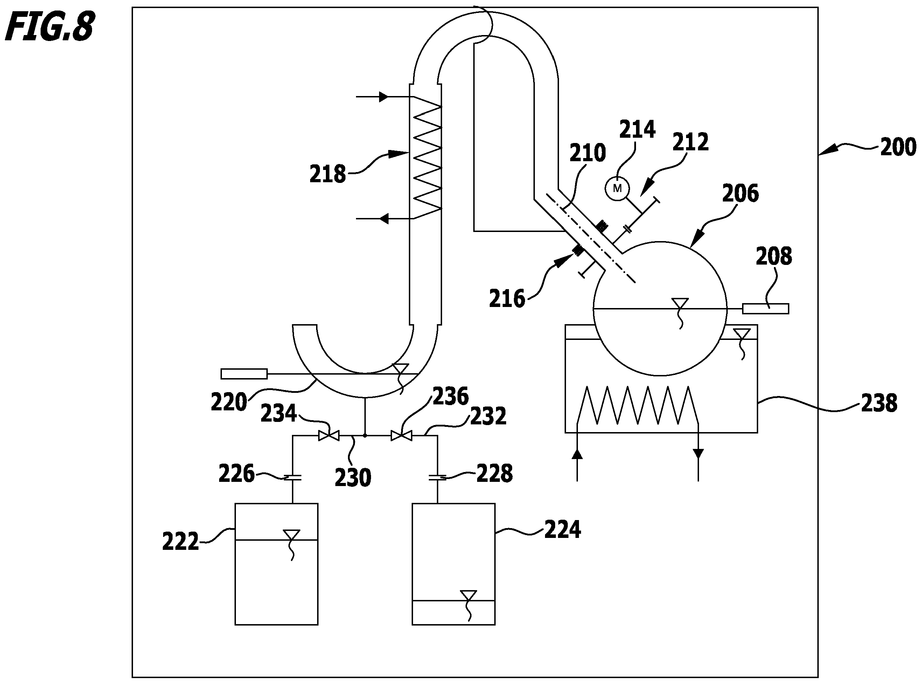

- Figur 8:: eine vergrößerte Ausschnittsansicht einer Rotationsverdampfereinrichtung der in Figur 7 dargestellten Vorrichtung.

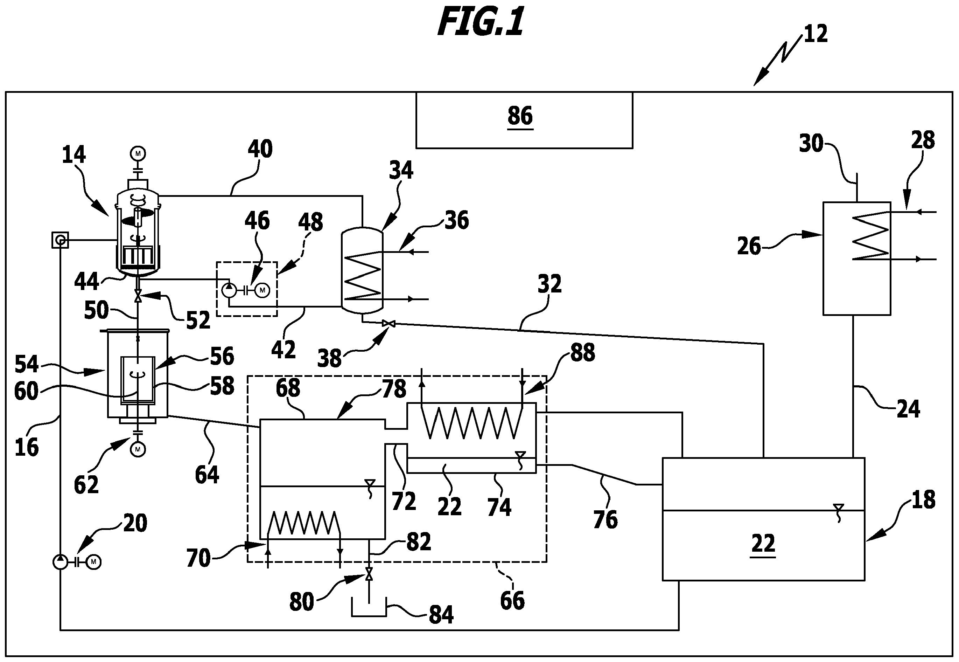

In Figur 1 ist schematisch eine Vorrichtung zur Separation von mineralischen Feststoffen aus bituminösen Baumaterialien 10 schematisch dargestellt und insgesamt mit dem Bezugszeichen 12 bezeichnet. Sie umfasst eine erste Wascheinrichtung 14, welche über eine Verbindungsleitung 16 mit einem Lösungsmittelvorratsbehälter 18 in Fluidverbindung steht. In die Verbindungsleitung 16 eingesetzt ist eine Pumpe 20, um reines Lösungsmittel 22 vom Lösungsmittelvorratsbehälter 18 in die erste Wascheinrichtung 14 bei Bedarf einzuleiten.

Über eine Verbindungsleitung 24 steht der Lösungsmittelvorratsbehälter 18 mit einer Lösungsmittelabscheideeinrichtung 26 in Fluidverbindung, welche eine Kühlung 28 zum Kondensieren des restlichen Lösungsmittels aus einem durch die Verbindungsleitung 24 strömenden Luft-Lösungsmittel-Gemisch. Die Lösungsmittelabscheideeinrichtung 26 umfasst einen Abluftauslass 30, aus welchem praktisch lösemittelfreie Abluft aus der Vorrichtung 12 ausströmen kann.

Der Lösungsmittelvorratsbehälter 18 steht über eine weitere Verbindungsleitung 32 mit einer Kondensationseinrichtung 34 in Fluidverbindung, welche eine weitere Kühleinrichtung 36 umfasst, um dampfförmiges Lösungsmittel 22 wieder zu verflüssigen. In der Verbindungsleitung 32 ist ein Ventil 38 angeordnet, mit welcher die Verbindungsleitung 32, durch welche reines Lösungsmittel 22 aus dem Lösungsmittelvorratsbehälter 18 strömt, geschlossen werden kann.

Die Kondensationseinrichtung 34 ist über eine Verbindungsleitung 40 mit einem oberen Ende der ersten Wascheinrichtung 14 in Fluidverbindung stehend. Über die Verbindungsleitung 40 kann ein Luft-Lösungsmittel-Gemisch aus der ersten Wascheinrichtung 14 der Kondensationseinrichtung 34 zugeführt werden. Ein sogenanntes kaltes Ende der Kondensationseinrichtung 34 ist über eine weitere Verbindungsleitung 42 mit einem unteren Ende 44 der ersten Wascheinrichtung 14 in Fluidverbindung stehend. In der Verbindungsleitung 42 ist ferner eine weitere Pumpe 46 angeordnet, die einen Teil einer Belüftungseinrichtung 48 bildet, mit welcher insbesondere Luft in das untere Ende 44 der ersten Wascheinrichtung 14 eingeblasen werden.

Das Ende 44 der ersten Wascheinrichtung 14 steht über eine Verbindungsleitung 50, in welcher ein Ventil 52 zum Verschließen derselben angeordnet ist, mit einer im Sinne der Ansprüche zweiten Trenneinrichtung 54 in Fluidverbindung, welche ausgebildet ist zum Separieren der Füllstoffe mit einer Korngröße, welche kleiner als ein Korngrößengrenzwert ist, aus einem Bitumen-Füllstoffe-Lösungsmittel-Gemisch, welches nach Öffnen des Ventils 52 aus der ersten Wascheinrichtung 14 in die zweite Trenneinrichtung 54 strömen kann. Die zweite Trenneinrichtung 54 umfasst eine Röhrenzentrifuge 56 mit Vollmanteltrommel 58. Sie ist um eine parallel zur Schwerkraftrichtung 120 verlaufende Drehachse 60 rotierbar gelagert. Um die Vollmanteltrommel 58 in Rotation versetzen zu können, ist ein Antrieb 62 vorgesehen.

Die zweite Trenneinrichtung 54 steht über eine Verbindungsleitung 64 mit einer Lösemittel-Rückgewinnungseinrichtung 66 in Fluidverbindung. Diese umfasst einen Verdampfungsbehälter 68, in welchem das von der zweiten Trenneinrichtung 54 abfließende Bitumen-Lösungsmittel-Gemisch gesammelt und mittels einer Heizeinrichtung 70 erhitzt wird. Dabei verdampft das Lösungsmittel 22 und strömt über einen Kanal 72 in einen Kondensationsbehälter 74 der Lösemittel-Rückgewinnungseinrichtung 66. Der Kondensationsbehälter 74 umfasst eine Kühleinrichtung 88, welche zum Kondensieren des im Verdampferbehälter 68 verdampften Lösungsmittels 22 genutzt wird, um das Lösungsmittel 22 wieder zu verflüssigen. Aus dem Kondensationsbehälter 74 kann das gereinigte Lösungsmittel 22 durch eine Verbindungsleitung 76 weiter in den Lösungsmittelvorratsbehälter 18 strömen.

Der Verdampferbehälter 68 bildet im Sinne der Ansprüche eine dritte Trenneinrichtung zum Separieren des Bitumens aus dem verbleibenden Bitumen-Lösungsmittel-Gemisch. Ein mit einem Ventil 80 verschließbarer Ablass 82 ermöglicht es, eingedicktes Bitumen mit einem Lösungsmittelrestgehalt aus dem Verdampferbehälter 68 abzulassen, beispielsweise in einen Sammelbehälter 84 oder in eine später noch beschriebene Rotationsverdampfereinrichtung 200.

Die Vorrichtung 12 umfasst ferner eine Steuer- und/oder Regelungseinrichtung 86 zum Steuern und/oder Regeln derselben, wobei die Steuer- und/oder Regelungseinrichtung 86 zu diesem Zweck mit allen Ventilen, Antrieben, Pumpen, Heiz- und Kühleinrichtungen der Vorrichtung 12 in nicht näher dargestellter Weise gekoppelt ist, um diese zu steuern und/oder zu regeln.

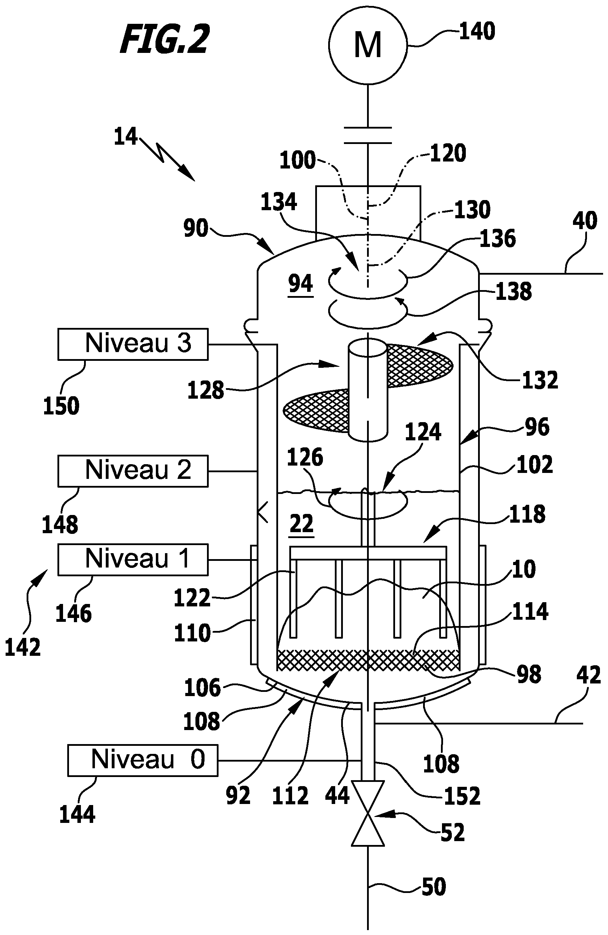

Der Aufbau der ersten Wascheinrichtung 14 wird in Verbindung mit Figur 2 näher erläutert.

Die erste Wascheinrichtung 14 umfasst eine erste Waschkammer 90, welche im Wesentlichen in Form eines tonnenförmigen Behälters ausgebildet ist. Am unteren Ende 44 ist an der ersten Waschkammer 90 eine erste Heizeinrichtung 92 angeordnet. Im Innenraum 94 der ersten Waschkammer 90 ist ein erster, im Wesentlichen zylindrisch ausgebildeter Baumaterialaufnahmebehälter 96 eingesetzt, welcher einen im Wesentlichen kreisförmigen Boden 98 sowie eine eine Längsachse 100 der ersten Waschkammer 90 umgebende Zylinderwand 102 umfasst. Der erste Baumaterialaufnahmebehälter 96 ist oben offen. Der Boden 98 ist in Form einer im Sinne der Ansprüche ersten Trenneinrichtung 104 ausgebildet zum Separieren der mineralischen Feststoffe mit einer Korngröße, welche größer als der Korngrößengrenzwert ist, aus dem Baumaterial-Lösungsmittel-Gemisch, welches gebildet wird durch das Baumaterial 10 sowie, abhängig von jeweiligen Verfahrensschritt, in der ersten Waschkammer 90 befindliches Lösungsmittel 22, wie dies schematisch in Figur 2 dargestellt ist.

Die Heizeinrichtung 92 umfasst eine an einem Boden 106 der ersten Waschkammer 90 angeordnete Heizmatte 108 sowie eine einen unteren Bereich der ersten Waschkammer außen ringförmig umgebende Heizmatte 110.

Die erste Trenneinrichtung 104 ist in Form einer Siebeinrichtung 112 ausgebildet und umfasst ein den Boden 98 bildendes Sieb 114 mit einer Maschenweite, die dem angegebenen Korngrößengrenzwert entspricht. Die Maschenweite liegt vorzugsweise in einem Bereich von etwa 0,05 mm bis etwa 0,10 mm. Günstigerweise beträgt sie 0,063 mm.

Der erste Baumaterialaufnahmebehälter 96 ist aus der ersten Waschkammer 90 entnehmbar. Hierfür lässt sich die erste Waschkammer 90 öffnen, indem ein ein Oberteil derselben bildender Deckel 116 geöffnet wird.

Im Innenraum 94 ist ferner eine Rühreinrichtung 118 angeordnet beziehungsweise einsetzbar, welche mehrere um die Längsachse 100, die parallel zur Schwerkraftrichtung 120 verläuft, rotierbare Rührelemente 122 umfasst, welche in das Baumaterial 10 eintauchen und dieses mit und/oder ohne Lösungsmittel 22 durchmischen können. Zum Drehen der Rührelemente 122 dient ein schematisch dargestellter Antrieb 124, welcher eine Rotation lediglich im Uhrzeigersinn wie durch den Pfeil 126 angedeutet ermöglicht.

Im oberen Bereich der ersten Waschkammer 90 ist unterhalb des Deckels 116 eine Abschöpfeinrichtung 128 angeordnet, welche ausgebildet ist zum Abschöpfen von in der ersten Waschkammer 90 aufgeschwemmten Zusatzstoffen, die im Baumaterial 10 enthalten. Sie umfasst ein um eine Schöpferdrehachse 130, welche parallel zur Schwerkraftrichtung 120 verläuft, rotierbares Schöpfelement 132. Die Abschöpfeinrichtung 128 umfasst ferner einen schematisch dargestellten Antrieb 134, welcher eine Rotation des Schöpfelements 132 sowohl im Uhrzeigersinn, wie durch den Pfeil 136 angedeutet, als auch im Gegenuhrzeigersinn, wie durch den Pfeil 138 angedeutet, ermöglicht.

Für die Antriebe 124 und 134 ist ein einziger Motor 140 vorgesehen, welcher über eine nicht näher dargestellte Antriebswelle sowohl mit der Rühreinrichtung 118 als auch mit der Abschöpfeinrichtung 128 gekoppelt ist. Ein nicht dargestellter Freilauf, welcher zwischen Antriebswellen des Motors 140 und der Rühreinrichtung 118 beziehungsweise der Abschöpfeinrichtung 128 angeordnet ist, ermöglicht es, dass, abhängig von einer Drehrichtung des Motors 140, entweder die Rührelemente 122 und das Schöpfelement 132 im Uhrzeigersinn rotieren oder nur das Schöpfelement im Gegenuhrzeigersinn.

Die erste Wascheinrichtung 14 umfasst ferner eine Lösungsmittelfüllstandsmesseinrichtung 142 mit vier Füllstandssensoren 144, 146, 148 und 150, die insgesamt vier unterschiedliche Niveaus für einen Lösungsmittelfüllstand in der ersten Waschkammer 90 definieren. Der erste Sensor ist unterhalb des Endes 44 in einem Ablass 152 der ersten Waschkammer 90 angeordnet. Der Füllstandssensor 146 ist im Bereich eines oberen Endes der Rühreinrichtung 118 angeordnet. Der Füllstandssensor 148 ist zwischen der Rühreinrichtung 118 und der Abschöpfeinrichtung 128 angeordnet. Und schließlich ist der Füllstandssensor 150 im Bereich eines oberen Endes der Abschöpfeinrichtung 128 angeordnet. Sie definieren somit die in Figur 2 schematisch gekennzeichneten Niveaus 0, 1, 2 und 3.

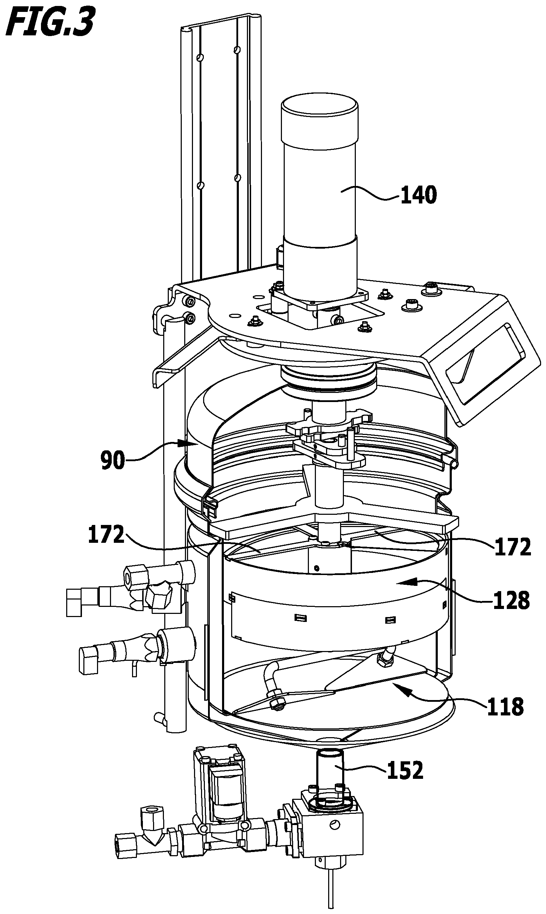

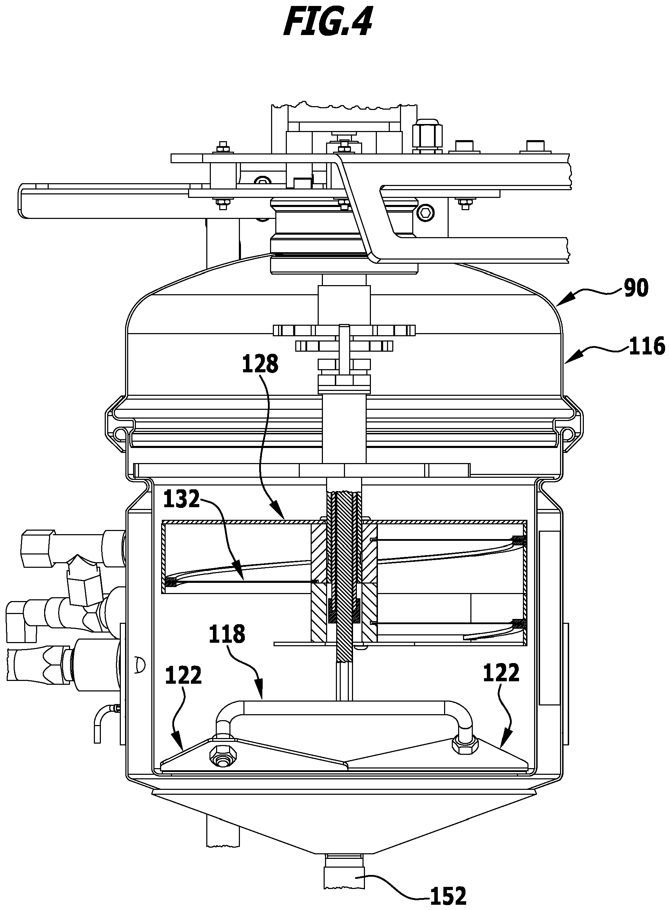

In den Figuren 3 bis 5 ist der konstruktive Aufbau der ersten Waschkammer 90 an einem konkreten Ausführungsbeispiel dargestellt. Die in Figur 2 schematisch dargestellten und oben beschriebenen Elemente und Bauteile der ersten Waschkammer 90 sind der besseren Übersicht wegen in den Figuren mit denselben Bezugszeichen bezeichnet.

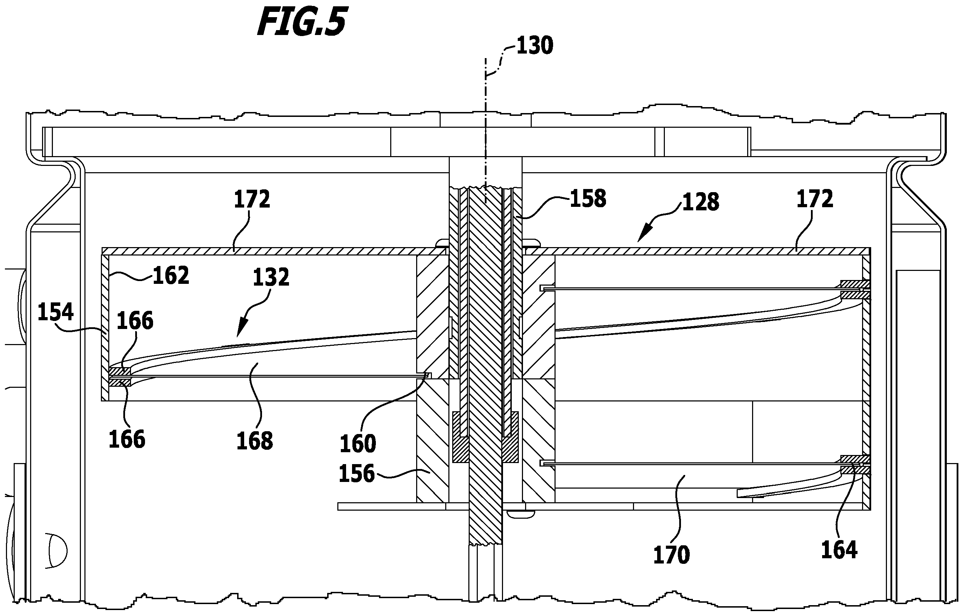

Ein Beispiel für eine Abschöpfeinrichtung 128 ist im Detail insbesondere in Figur 5 gut zu erkennen. Das Schöpfelement 132 umfasst eine äußere Hülse 154 sowie eine innere Hülse 156 in Form einer Nabe, welche über eine rohrförmige Welle 158 mit dem Motor 140 gekoppelt ist. In der Hülse 156 ist eine in radialer Richtung von der Schöpferdrehachse 130 weg und in Richtung auf die Hülse 154 hin weisende, sich spiralförmig in Richtung der Schöpferdrehachse 130 windende Nut 160 ausgebildet. Die Hülse 154 trägt auf ihrer Innenseite 162 zwei zwischen sich eine weitere Nut 164 definierende leistenförmige Vorsprünge 166, die sich ebenfalls spiralförmig um die Schöpferdrehachse 130 in Richtung derselben erstrecken. Die Nuten 160 und 164 sind so ausgebildet, dass sie einander gegenüberliegen, wie dies im Schnitt in Figur 5 gut zu erkennen ist.

Das Schöpfelement 132 umfasst ferner eine Schöpfwand 168, welche aus einem Sieb 170 gebildet ist. Dieses ist vorzugsweise aus einem Edelstahl-Drahtgewebe hergestellt und weist typischerweise eine Maschenweite von etwa 0,5 mm auf. Diese sphärisch geformte Schöpfwand 168 wird erzeugt, indem ein Kreisringsegment aus dem ebenen Edelstahl-Drahtgewebe ausgeschnitten und in die beiden Nuten 160 und 164 eingeführt wird. Ein Abstand der Hülsen 154 und 156 wird durch Speichen 172 vorgegeben, welche obere Enden der Hülsen 154 und 156 miteinander koppeln.

Durch die Kombination des gewählten Materials zur Ausbildung der Schöpfwand 168, welches vorzugsweise elastisch verformbar ist und eine minimale Verschiebbarkeit von das Drahtgewebe ausbildenden Drähten ermöglicht, wird erreicht, dass sich aus dem ursprünglich ebenen Kreisringsegment die sphärisch gewundene Schöpfwand 168 formen lässt. Aufgrund der Ausgestaltung der Nuten 160 und 164 sowie die Wahl des Materials zur Ausbildung der Schöpfwand 168 kann erreicht werden, dass sich das Sieb 170 an Flanken der Nuten 164 und 166 drückt und dadurch eine Abdichtung des Siebs 170 gegenüber beiden Hülsen 154 und 156 sicherstellt.

Das Schöpfelement 132 kann aus der ersten Waschkammer 90 entfernt und das Sieb 170 wieder aus den Nuten 160 und 164 herauszogen werden. Es liegt dann wieder als ebenes Kreisringsegment vor, was durch die Elastizität des gewählten Materials ermöglicht wird. Das Sieb 170 kann dann zum Beispiel durch Abbürsten einfach gereinigt werden. Außerdem ist ein kostengünstiger und einfacher Ersatz des Siebes 170 bei sehr starker Verschmutzung des Schöpfelements 132 möglich.

Mit der Vorrichtung 12 lassen sich insbesondere die oben beschriebenen vorteilhaften Verfahren zur Separation von mineralischen Feststoffen aus bituminösen Baumaterialien durchführen. Hierzu wird insbesondere wie folgt vorgegangen.

Die zu analysierende Asphaltprobe, also das Baumaterial 10, wird in die erste Wascheinrichtung 14 eingebracht, und zwar in den ersten Baumaterialaufnahmebehälter 96. Dann wird Lösungsmittel 22 aus dem Lösungsmittelvorratsbehälter 18 in die erste Waschkammer 90 eingeleitet und das Baumaterial 10 vollständig von Bitumen und Füllstoffen gereinigt. Die Mischung aus Lösungsmittel, Bitumen und Füllstoffen fließt bei geöffnetem Ventil 52 durch den Ablass 152 in die zweite Trenneinrichtung 54, in welcher die Feststoffe, auch als Füller bezeichnet, durch Zentrifugieren abgetrennt werden.

Die verbleibende Mischung aus Lösungsmittel und Bitumen fließt durch die Verbindungsleitung 64 in die Lösungsmittel-Rückgewinnungsanlage 66, in welcher durch Verdampfen und anschließendes Kondensieren das Lösungsmittel 22 gereinigt und im Lösungsmittelvorratsbehälter 18 gesammelt wird, um für den nächsten Analyseprozesse wieder genutzt zu werden.

Um das noch im Baumaterial 10 und in der ersten Wascheinrichtung 14 verbleibende Lösungsmittel zu entfernen, wird mit der Belüftungseinrichtung 48 eine Luftumwälzung erzeugt, so dass die Kondensationseinrichtung 34 durchströmt wird und der Lösungsmitteldampf aus dem Innenraum 94 kondensiert. Für die Trocknung des Baumaterials 10 wirkt unterstützend die in den Bauteilen der ersten Wascheinrichtung 14 vorhandene Restwärme, welche aufgrund der Erwärmung der ersten Waschkammer 90 durch die Heizeinrichtung 92 erfolgt.

Die Vorrichtung 12 umfasst ferner mindestens einen Temperatursensor zur Ermittlung einer Temperatur des Lösungsmittels 22. Dieser ist in den Figuren nicht dargestellt.

Der genaue Verfahrensablauf zum Separieren einer modifiziertes Bitumen enthaltenden Baumaterialprobe wird nachfolgend näher erläutert.

Zunächst wird das Baumaterial 10 entweder mit Raumtemperatur oder nach Erwärmen auf maximal die Siedetemperatur des Lösungsmittels 22 in den ersten Baumaterialaufnahmebehälter 96 gegeben. Danach werden die Rühreinrichtung 118 und die Abschöpfeinrichtung 128 eingesetzt.

Anschließend wird das Ventil 52 geschlossen und die erste Waschkammer 90 bis auf das Niveau 1 mit Lösungsmittel 22 befüllt. Gegebenenfalls wird die Heizeinrichtung 92 aktiviert.

Nach einer gewissen Zeit zerfällt das Baumaterial 10, beispielsweise der eingebrachte Asphalt. Die Zusatzstoffe sind dann mit einer Mischung aus Bitumen und Gesteinsmehl umhüllt. Die Probe aus Baumaterial 10 wird intermittierend mit der Rühreinrichtung 118 durchmischt. Dabei löst sich der größte Teil des Bitumens von den Zusatzstoffen.

Nach einer weiteren Wartezeit wird die Probe von unten mit der Belüftungseinrichtung 48 mit Luftblasen durchströmt. Dabei wird der zwischenzeitlich angequollene, den Zusatzstoff im Bitumen bildende oder in diesem enthaltene Gummi nach oben an die Oberfläche des Lösungsmittelspiegels, der sich auf dem Niveau 1 befindet, transportiert, da der in den Zusatzstoffen enthaltene Gummi eine geringere Dichte als das Lösungsmittel 22 beziehungsweise das Lösungsmittel-Bitumen-Gemisch aufweist. Weiterer Einsatz der Rühreinrichtung 118 unterstützt den Trennprozess.

In einem nächsten Schritt wird die erste Waschkammer 90 bis auf das Niveau 2 weiter mit reinem Lösungsmittel 22 aus dem Lösungsmittelvorratsbehälter 18 befüllt und abermals eine Wartezeit abgewartet. Durch das - vorzugsweise von unten - in die erste Waschkammer 90 einströmende reine Lösungsmittel 22 entsteht ein Dichtegradient, der weiter dazu führt, dass die Zusatzstoffe an die Oberfläche des Lösungsmittels 22 in der ersten Waschkammer 90 gefördert werden.

Als nächstes wird die erste Waschkammer 90 weiter mit Lösungsmittel 22 befüllt, bis dieses das Niveau 3 erreicht. Gleichzeitig werden mittels der Abschöpfeinrichtung 128 an die Oberfläche des Lösungsmittels 22 aufgeschwemmte Gummipartikel abgeschöpft. Hierzu wird das Schöpfelement 132 rotiert.

Zum Abschluss eines Reinigungszyklus, welcher mit dem oben beschriebenen Schließen des Ventils 52 beginnt, wird dieses wieder geöffnet und der Lösungsmittelpegel in der ersten Waschkammer 90 bis auf das Niveau 0 abgesenkt. Der beschriebene Zyklus wird drei bis sieben Mal durchlaufen, je nach Typ des eingesetzten Baumaterials 10.

Nach Durchlaufen der gewünschten Anzahl an Reinigungszyklen wird die erste Waschkammer 90 durch Eindüsen von Lösungsmittel 22 am oberen Behälterrand gespült.

Als nächstes werden die mit der Abschöpfeinrichtung 128 abgeschöpften Zusatzstoffe unter Einsatz der Belüftungseinrichtung 48 getrocknet. Durch die nicht dargestellten Ventile vor und nach der Pumpe 46 der Belüftungseinrichtung 48, bei welcher es sich insbesondere um eine Vakuumpumpe handeln kann, kann je nach Sättigung der Luft in der ersten Wascheinrichtung 14 mit Lösungsmitteldampf eine Trocknung mit Überdruck, Umgebungsdruck oder Unterdruck erfolgen. Vorteilhaft ist es, wenn bis zu drei Trocknungszyklen durchlaufen werden, wobei bei jedem Trocknungszyklus ein zeitlicher Anteil von 50% Unterdruck und 50% Überdruck genutzt wird.

Die in der zweiten Trenneinrichtung 54 abgetrennten Füllstoffe werden durch Aufwärmen der zweiten Trenneinrichtung 54 getrocknet und können dann nach Ablassen des Lösungsmittels, beispielsweise durch Evakuieren der zweiten Trenneinrichtung 54, entnommen werden.

Nach vollständiger Austrocknung der ersten Wascheinrichtung 14 kann diese durch Abnehmen des Deckels 116 geöffnet und die getrockneten Feststoffe des Baumaterials 10 können zusammen mit dem ersten Baumaterialaufnahmebehälter 96 entnommen und gewogen werden, um deren Gewichtsanteil an der eingesetzten Probe des Baumaterials 10 zu ermitteln.

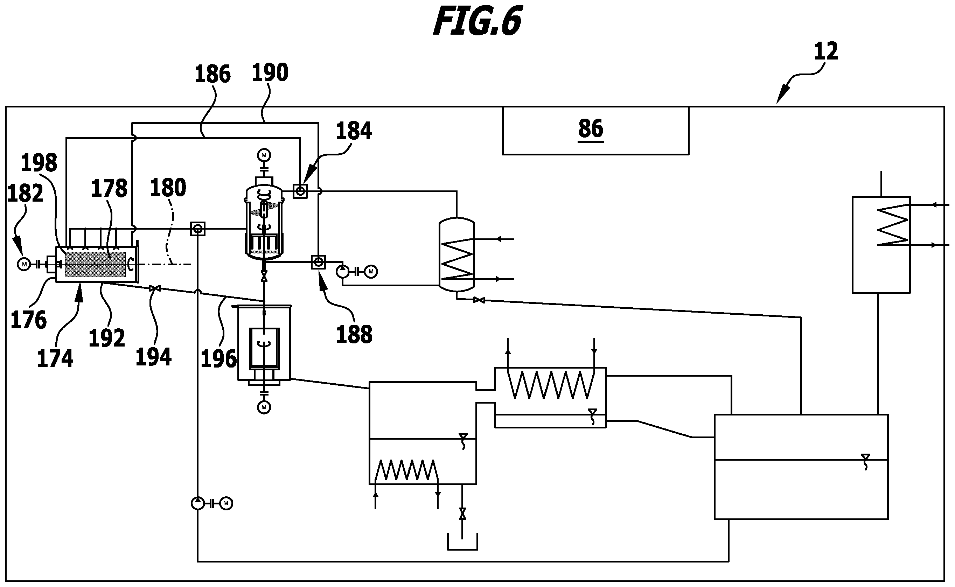

Um mit der Vorrichtung 12 nicht nur in der beschriebenen Weise Baumaterial mit durch Zugabe von Zusatzstoffen modifiziertem Bitumen separieren zu können, sondern auch beispielsweise herkömmlichen Asphalt mit nicht modifiziertem Bitumen, kann die Vorrichtung 12, wie in Figur 6 schematisch dargestellt, ferner optional eine zweite Wascheinrichtung 174 mit einer zweiten Waschkammer 176 umfassen, in welcher ein zweiter Baumaterialaufnahmebehälter 178 angeordnet und um eine quer zur Schwerkraftrichtung 120 verlaufende Schwenkachse 180 mittels eines Antriebs 182 verschwenkbar ist.

Die zweite Wascheinrichtung 176 ist in der Vorrichtung 12 zur ersten Wascheinrichtung 14 vorzugsweise parallel geschaltet. Hierzu ist in die Verbindungsleitung 40 optional ein Wegeventil 184 eingesetzt, welches über eine Verbindungsleitung 186 mit der zweiten Wascheinrichtung 176 in Fluidverbindung steht. In die Verbindungsleitung 42 ist optional ein weiteres Wegeventil 188 eingesetzt, welches über eine Verbindungsleitung 190 ebenfalls mit der zweiten Wascheinrichtung 176 in Fluidverbindung steht. Die zweite Wascheinrichtung 176 umfasst ebenfalls einen Ablass 192, welcher mit einem Ventil 194 verschlossen werden kann. Das Ventil 194 ist ferner mit der Verbindungsleitung 50 über eine Verbindungsleitung 196 in Fluidverbindung stehend. Die zweite Wascheinrichtung 176 umfasst eine liegende Siebtrommel 198, in welche eine Probe aus Baumaterial 10 eingesetzt und in herkömmlicher Weise in ihre Bestandteile zerlegt werden kann.

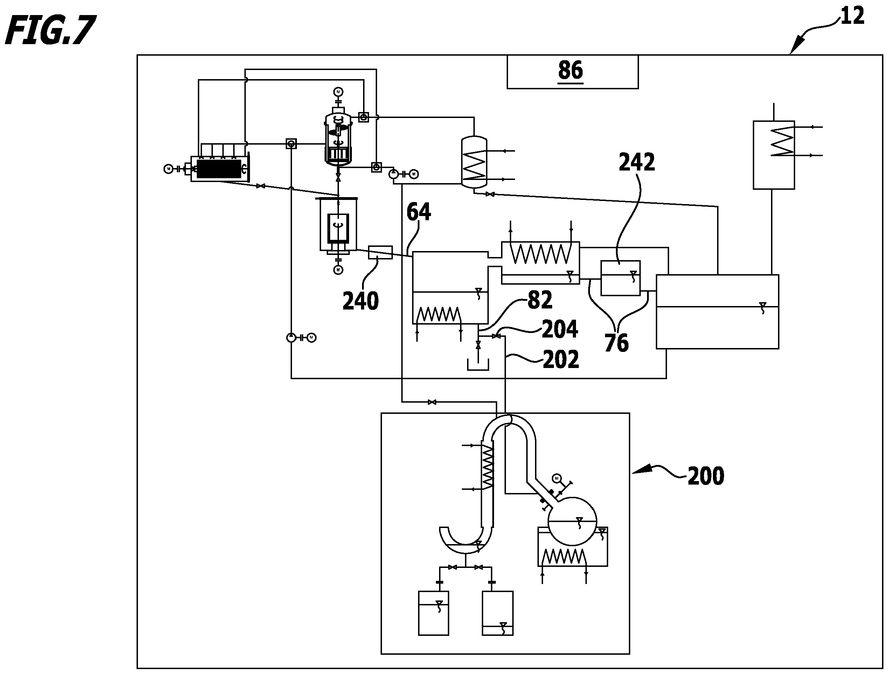

In Figur 7 ist schematisch eine weitere Ergänzung der Vorrichtung 12 dargestellt, welche zusätzlich zu den zwei Wascheinrichtungen 14 und 176 eine Rotationsverdampfereinrichtung 200 umfasst. Diese dient dazu, einen im Verdampfungsbehälter 68 gewonnenen Destillationsrückstand, bei dem es sich um ein konzentriertes Bitumen-Lösungsmittel-Gemisch handelt, weiter untersuchen zu können. Zu diesem Zweck ist der Ablass über eine Verbindungsleitung 202 mit der Rotationsverdampfereinrichtung 200 in Fluidverbindung stehend. Ein Ventil 204 in der Verbindungsleitung 202 ermöglicht wahlweise das Verschließen derselben. Um das Bitumen näher analysieren zu können, muss es absolut frei von Lösungsmittelrückständen sein. Bislang wurde dies derart gelöst, dass in einem offenen Gefäß, zum Beispiel über einem Glaskolben in Form des Sammelgefäßes 84, der Destillationsrückstand aus dem Verdampfungsbehälter 68 über das Ventil 80 abgelassen und an einem räumlich getrennt aufgestellten, autark arbeitenden Rotationsverdampfer verarbeitet wurde.

Die Integration eines Rotationsverdampfers 200 in die Vorrichtung 12 bietet jedoch Vorteile. Er arbeitet nicht autark, sondern nutzt Bauteile und Einrichtungen der Vorrichtung 12, und zwar insbesondere die Pumpe 46, die Steuerungs- und/oder Regelungseinrichtung 86 sowie die Lösungsmittelabscheideeinrichtung 26, die auch als Abluftkühlfalle bezeichnet wird. Die Rotationsverdampfereinrichtung 200 weist gegenüber einem herkömmlichen Rotationsverdampfer erweiterte Funktionen auf. So kann das Bitumen-Lösungsmittel-Gemisch direkt aus dem Sumpf des Verdampfungsbehälters 68 über die Verbindungsleitung 202 in einen Verdampferkolben 206 geleitet werden. Ein Füllstandssensor 208 meldet den Füllstand im Verdampferkolben 206 an die Steuerungs- und/oder Regelungseinrichtung 86. Der Verdampferkolben 206 ist um seine Längsachse 210 rotierbar gelagert und mittels eines Antriebs 212, welcher einen Getriebemotor 214 umfasst, rotierbar. Eine vakuumdichte Drehdurchführung 216 verbindet den Verdampferkolben 206 mit einer feststehenden Kondensiereinrichtung 218 und einem Sammelbehälter 220. Am Sammelbehälter 220 sind zwei Wechselbehälter 222 und 224 über je eine Schnellkupplung 226 beziehungsweise 228 angeschlossen. Verbindungsleitungen 230 und 232, mit welchen die Wechselbehälter 222 und 224 mit dem Sammelbehälter 220 in Fluidverbindung stehen, können über Ventile 234 und 236 geschlossen werden.

Zum Erwärmen des Bitumen-Lösungsmittel-Gemisches im Verdampferkolben 206 dient ein Heizbad 238. Dieses wird vorzugsweise mit mindestens zwei unterschiedlichen Temperaturen betrieben. Eine erste Heiztemperatur liegt unterhalb der Zersetzungstemperatur des Lösungsmittels 22, eine zweite Heiztemperatur oberhalb der Zersetzungstemperatur. Das Rückkondensat, das durch Verdampfung mit der niedrigeren Temperatur gewonnen wird, wird im ersten Wechselbehälter 222 gesammelt und kann nach einer Kontrolle des pH-Wertes wieder verwendet werden. Das Rückkondensat, das durch Verdampfung mit der höheren Temperatur gewonnen wurde, wird im zweiten Wechselbehälter 224 gesammelt und muss generell entsorgt werden.

Nach Prozessende befindet sich im Verdampferkolben 206 nur noch reines Bitumen. Nach Belüften, das heißt Brechen des Vakuums, kann der Verdampferkolben 206 mit seinem Inhalt abgenommen werden.

Der guten Ordnung halber sei erwähnt, dass die Rotationsverdampfereinrichtung 200 auch in Kombination mit der in Figur 1 schematisch dargestellten Vorrichtung 12 vorgesehen sein kann, also auch dann, wenn die Vorrichtung 12 keine zweite Wascheinrichtung 176 umfasst.

Optional kann ferner bei allen drei Varianten der Vorrichtung 12 eine in Figur 7 schematisch dargestellte optische Sensoreinrichtung 240 in der Verbindungsleitung 64 zwischen der zweiten Trenneinrichtung 54 und der dritten Trenneinrichtung 78 angeordnet sein zum Messen einer Absorption des Bitumen-Lösungsmittel-Gemisches, welches aus der zweiten Trenneinrichtung 54 in die dritte Trenneinrichtung 78 strömt. Abhängig vom Bitumengehalt im Gemisch kann dann von der Steuerungs- und/oder Regelungseinrichtung 86 automatisch die Zahl der oben beschriebenen Waschzyklen in der ersten Wascheinrichtung 14 oder der zweiten Wascheinrichtung 176 vorgegeben werden.

Ferner kann optional bei allen drei Varianten der Vorrichtung 12 ein Wasserbad 242 in die Verbindungsleitung 76 zwischengeschaltet werden. Durch das Wasserbad 242 kann das Lösungsmittel aus dem Kondensationsbehälter 74 strömen, um Chlorid-Ionen zu binden und ein Übersäuern des Lösungsmittels 22 zu verhindern.

Mit den beschriebenen, vorteilhaften Vorrichtungen 12 sowie den beschriebenen, bevorzugten Verfahren lassen sich Proben von bituminösen Baumaterialien auf einfache, sichere und umweltverträgliche Weise in ihre Bestandteile zerlegen, um durch anschließendes Wiegen der Bestandteile deren Gewichtsanteil an der ursprünglich in die Vorrichtung 12 eingesetzten Probe zu ermitteln.

## Patentansprüche

1. Verfahren zur Separation von mineralischen Feststoffen aus bituminösen Baumaterialien (10), welche mineralische Feststoffe, durch Zusatzstoffe modifiziertes Bitumen und Füllstoffe enthalten, umfassend
• Waschen des Baumaterials in einem Lösungsmittel (22), wobei ein Baumaterial-Lösungsmittel-Gemisch gebildet wird und die Zusatzstoffe beim oder nach dem Waschen des Baumaterials (10) mit dem Lösungsmittel (22) aus und/oder auf diesem aufgeschwemmt werden,
• Abschöpfen der aufgeschwemmten Zusatzstoffe vom verbleibenden Feststoffe-Bitumen-Füllstoffe-Lösungsmittel-Gemisch,
• Separieren der mineralischen Feststoffe mit einer Korngröße, welche größer als ein Korngrößengrenzwert ist, aus dem Baumaterial-Lösungsmittel-Gemisch, wobei ein Bitumen-Füllstoffe-Lösungsmittel-Gemisch gebildet wird,
• Separieren der Füllstoffe mit einer Korngröße, welche kleiner als ein Korngrößengrenzwert ist, aus dem Bitumen-Füllstoffe-Lösungsmittel-Gemisch,
• Separieren des Bitumens aus dem verbleibenden Bitumen-Lösungsmittel-Gemisch durch Verdampfen des Lösungsmittels,
• Durchführen aller Verfahrensschritte in einer für Lösungsmittel dichten, geschlossenen Vorrichtung (12) und
• Auffangen und wieder Verflüssigen des in allen Verfahrensschritten verdampften Lösungsmittels (22).

2. Verfahren nach Anspruch 1, **dadurch gekennzeichnet, dass** die mineralischen Feststoffe nach dem Separieren aus dem Baumaterial-Lösungsmittel-Gemisch und/oder die Füllstoffe nach dem Separieren aus dem Bitumen-Füllstoffe-Lösungsmittel-Gemisch getrocknet werden.

3. Verfahren nach einem der voranstehenden Ansprüche, **dadurch gekennzeichnet, dass** das Bitumen-Lösungsmittel-Gemisch erhitzt wird zum Separieren des Bitumens durch Verdampfen des Lösungsmittels (22).

4. Verfahren nach einem der voranstehenden Ansprüche, **dadurch gekennzeichnet, dass** das Bitumen-Füllstoffe-Lösungsmittel-Gemisch zum Separieren der Füllstoffe zentrifugiert wird.

5. Verfahren nach einem der voranstehenden Ansprüche, **dadurch gekennzeichnet, dass** das Baumaterial (10) beim Waschen mit dem Lösungsmittel erhitzt und/oder durch Rühren durchmischt wird.

6. Verfahren nach einem der voranstehenden Ansprüche, **dadurch gekennzeichnet, dass** als Lösungsmittel (22) Trichlorethylen, Trichlorethan, nHexan, Aceton, Ethylacetan, Toluol, Methylenchlorid und/oder ein aus nachwachsenden Rohstoffen hergestelltes Lösungsmittel, insbesondere Capryl-Säure, Methylester oder Octansäure-Methylester, verwendet wird.

7. Verfahren nach einem der voranstehenden Ansprüche, **dadurch gekennzeichnet, dass** das zum Aufschwemmen der Zusatzstoffe das Baumaterial-Lösungsmittel-Gemisch von unten mit einem Gas durchspült wird, wobei als Gas vorzugsweise Luft verwendet wird und wobei weiter vorzugsweise das Baumaterial-Lösungsmittel-Gemisch beim Durchspülen mit Gas durch Rühren durchmischt wird.

8. Verfahren nach einem der vorstehenden Ansprüche, **gekennzeichnet dadurch, dass** die Zusatzstoffe nach dem Abschöpfen getrocknet werden.

9. Vorrichtung (12) zur Separation von mineralischen Feststoffen aus bituminösen Baumaterialien (10), welche mineralische Feststoffe, durch Zusatzstoffe modifiziertes Bitumen und Füllstoffe enthalten, mit:
• mindestens einer ersten und/oder einer zweiten Wascheinrichtung (14, 174) zum Waschen des Baumaterials (10) in einem Lösungsmittel (22), wobei ein Baumaterial-Lösungsmittel-Gemisch gebildet wird und die mindestens eine Wascheinrichtung dazu ausgebildet ist, dass die Zusatzstoffe beim oder nach dem Waschen des Baumaterials (10) mit dem Lösungsmittel (22) aus und/oder auf diesem aufgeschwemmt werden,
• einer Abschöpfeinrichtung (128) zum Abschöpfen von aufgeschwemmten Zusatzstoffen vom verbleibenden Feststoffe-Bitumen-Füllstoffe-Lösungsmittel-Gemisch mit einem um eine Schöpferdrehachse (130) rotierbaren Schöpfelement (132),
• einer ersten Trenneinrichtung (104) zum Separieren der mineralischen Feststoffe mit einer Korngröße, welche größer als ein Korngrößengrenzwert ist, aus dem Baumaterial-Lösungsmittel-Gemisch, wobei ein Bitumen-Füllstoffe-Lösungsmittel-Gemisch gebildet wird,
• einer zweiten Trenneinrichtung (54) zum Separieren der Füllstoffe mit einer Korngröße, welche kleiner als ein Korngrößengrenzwert ist, aus dem Bitumen-Füllstoffe-Lösungsmittel-Gemisch,
• einer dritten Trenneinrichtung (78) zum Separieren des Bitumens aus dem verbleibenden Bitumen-Lösungsmittel-Gemisch durch Verdampfen des Lösungsmittels (22) und
• einer Lösungsmittel-Rückgewinnungseinrichtung (66) zum Auffangen und wieder Verflüssigen des in allen Einrichtungen der Vorrichtung (12) verdampften Lösungsmittels (22),
• wobei die Vorrichtung (12) in Form eines für das Lösungsmittel (22) dichten, geschlossenen Systems ausgebildet ist.

10. Vorrichtung nach Anspruch 9, **dadurch gekennzeichnet, dass** die erste Trenneinrichtung (104) in Form einer Siebeinrichtung (112) ausgebildet ist.

11. Vorrichtung nach einem der Ansprüche 9 bis 10, **gekennzeichnet durch** eine Rotationsverdampfereinrichtung (200) zum Entfernen von Lösungsmittel (22) aus dem von der dritten Trenneinrichtung (78) abgeschiedenen Bitumen-Lösungsmittel-Gemisch, welche Rotationsverdampfereinrichtung (200) mit der dritten Trenneinrichtung (78) und mit der Lösungsmittel-Rückgewinnungseinrichtung (66) in Fluidverbindung steht.

12. Vorrichtung (12) nach einem der Ansprüche 9 bis 11, **gekennzeichnet dadurch, dass** die Schöpferdrehachse (130) parallel zur Schwerkraftrichtung (120) verläuft.

13. Vorrichtung (12) nach einem der Ansprüche 9 bis 12, **gekennzeichnet dadurch, dass** die Abschöpfeinrichtung (128) einen Antrieb (134) zum Drehen des Schöpfelements (132) umfasst.

14. Vorrichtung (12) nach einem der Ansprüche 9 bis 13, **gekennzeichnet dadurch, dass** das Schöpfelement (132) eine schraubenförmig gewundene Schöpfwand (168) umfasst, wobei die Schöpfwand vorzugsweise mindestens teilweise durch ein Schöpfsieb (170) gebildet wird und wobei sich die Schöpfwand (168) weiter vorzugsweise über einen Umfangswinkel von mindestens 360° erstreckt.

15. Vorrichtung (12) nach Anspruch 14, **gekennzeichnet dadurch, dass** das Schöpfelement (132) eine innere Hülse (156) und eine äußere Hülse (154) umfasst, welche jeweils konzentrisch zur Schöpferdrehachse (130) angeordnet sind und jeweils eine in Richtung auf die jeweils andere Hülse (154, 156) hin geöffnete Nut (160, 164) zum Aufnehmen innerer und äußerer Ränder einer Schöpfwand (168) aufweisen.

## Claims

1. A method for the separation of mineral solids from bituminous building materials (10) that contain mineral solids, bitumen modified by additives, and fillers, comprising
• washing the building material in a solvent (22), whereupon a building material-solvent mixture is formed and during or after washing of the building material (10) with the solvent, the additives are floated out and/or on it,
• skimming the floated additives from the remaining solid-bitumen-filler mixture,
• separating the mineral solids with a particle size that is larger than a threshold particle size out of the building material-solvent mixture, whereupon a bitumen-filler-solvent mixture is formed,
• separating the fillers with a particle size that is smaller than a threshold particle size out of the bitumen-filler-solvent mixture,
• separating the bitumen out of the remaining bitumen-solvent mixture by evaporating the solvent,
• carrying out all of the steps of the method in a device (12) that is tightly sealed as regards the solvent, and
• collecting and re-liquefying the solvent (22) evaporated in all of the steps of the method.

2. The method according to claim 1, **characterized in that** after separation from the building material-solvent mixture, the mineral solids are dried and/or after separation from the bitumen-filler-solvent mixture, the fillers are dried.

3. The method according to any one of the preceding claims, **characterized in that** the bitumen-solvent mixture is heated in order to separate the bitumen by evaporation of the solvent (22).

4. The method according to any one of the preceding claims, **characterized in that** the bitumen-filler-solvent mixture is centrifuged in order to separate the fillers.

5. The method according to any one of the preceding claims, **characterized in that** when washing with the solvent, the building material (10) is heated and/or mixed thoroughly by stirring.

6. The method according to any one of the preceding claims, **characterized in that** trichloroethylene, trichloroethane, n-hexane, acetone, ethyl acetate, toluene, methylene chloride and/or a solvent produced from renewable raw materials, in particular caprylic acid, methyl esters or octanoic acid esters, is used as the solvent (22).

7. The method according to any one of the preceding claims, **characterized in that** in order to float the additives, the building material-solvent mixture is flushed through from below with a gas, wherein air is preferably used as the gas and wherein more preferably, the building material-solvent mixture is thoroughly mixed by flushing with gas.

8. The method according to any one of the preceding claims, **characterized in that** after skimming, the additives are dried.

9. A device (12) for separating mineral solids from bituminous building materials (10) that contain mineral solids, bitumen modified by additives, and fillers, having:
• at least a first and/or a second washing means (14, 174) for washing the building material (10) in a solvent (22), whereupon a building material-solvent mixture is formed and the at least one washing means is configured in a manner such that during or after washing the building material (10) with the solvent (22), the additives are floated out of and/or on it,
• a skimming means (128) for skimming floated additives from the remaining solids-bitumen-fillers-solvent mixture, having a scoop element (132) that is rotatable about a rotational axis of the scoop rotary (130),
• a first separating means (104) for separating the mineral solids with a particle size which is greater than a threshold particle size from the building material-solvent mixture, whereupon a bitumen-filler-solvent mixture is formed,
• a second separating means (54) for separating the fillers with a particle size which is smaller than a threshold particle size from the bitumen-filler-solvent mixture,
• a third separating device (78) for separating the bitumen from the remaining bitumen-solvent mixture by evaporation of the solvent (22), and
• a solvent recovery means (66) for collecting and re-liquefying the solvent (22) evaporated in all of the means of the device (12),
• wherein the device (12) is in the form of a system which is tightly sealed as regards the solvent (22).

10. The device according to claim 9, **characterized in that** the first separating means (104) is in the form of a screen means (112).

11. The device according to any one of claims 9 to 10, **characterized by** a rotary evaporator means (200) for removing solvent (22) from the bitumen-solvent mixture separated out from the third separating means (78), which rotary evaporator means (200) being in fluid communication with the third separating means (78) and with the solvent recovery means (66).

12. The device (12) according to any one of claims 9 to 11, **characterized in that** the scoop rotational axis (130) runs parallel to the gravitational direction (120) .

13. The device (12) according to any one of claims 9 to 12, **characterized in that** the skimming means (128) comprises a drive (134) for turning the scoop element (132) .

14. The device (12) according to one of claims 9 to 13, **characterized in that** the scoop element (132) comprises a helically wound scoop wall (168), wherein the scoop wall is preferably at least partially formed by a scoop screen (170) and wherein furthermore, the scoop wall (168) preferably extends over a circumferential angle of at least 360°.

15. The device (12) according to claim 14, **characterized in that** the scoop element (132) comprises an inner sleeve (156) and an outer sleeve (154) that are respectively disposed concentrically to the scoop rotational axis (130) and that respectively have a groove (160, 164) which is open in the direction of the respective other sleeve (154, 156) in order to accommodate inner and outer edges of a scoop wall (168) .

## Revendications

1. Procédé pour la séparation de substances solides minérales à partir de matériaux de construction bitumineux (10) qui contiennent des substances solides minérales, du bitume modifié par des additifs, ainsi que des matières de charge, comprenant :
• un lavage du matériau de construction dans un solvant (22), dans lequel on obtient un mélange matériau de construction-solvant, et les additifs, lors du lavage du matériau de construction (10) avec le solvant (22) ou après ledit lavage, sont mis en suspension hors du solvant et/ou sur ce dernier ;
• un écrémage des additifs mis en suspension par rapport au mélange substances solides-bitume-matières de charge-solvant qui subsiste ;
• une séparation des substances solides minérales possédant une granulométrie qui est supérieure à une valeur granulométrique limite, à partir du mélange matériau de construction-solvant, dans laquelle on obtient un mélange bitume-matières de charge-solvant ;
• une séparation des matières de charge possédant une granulométrie qui est inférieure à une valeur granulométrique limite, à partir du mélange bitume-matières de charge-solvant ;
• une séparation du bitume par rapport au mélange bitume-solvant qui subsiste, par évaporation du solvant ;
• une mise en œuvre de toutes les étapes opératoires dans un dispositif fermé (12) étanche pour des solvants ; et
• une récupération et une nouvelle fluidification du solvant évaporé (22) dans toutes les étapes opératoires.

2. Procédé selon la revendication 1, **caractérisé en ce qu'**on sèche les substances solides minérales après la séparation à partir du mélange matériau de construction-solvant et/ou les matières de charge après la séparation à partir du mélange bitume-matières de charge-solvant.

3. Procédé selon l'une quelconque des revendications précédentes, **caractérisé en ce qu'**on chauffe le mélange bitume-solvant à des fins de séparation du bitume par évaporation du solvant (22).

4. Procédé selon l'une quelconque des revendications précédentes, **caractérisé en ce qu'**on soumet le mélange bitume-matières de charge-solvant à une centrifugation à des fins de séparation des matières de charge.

5. Procédé selon l'une quelconque des revendications précédentes, **caractérisé en ce qu'**on chauffe le matériau de construction (10) au cours du lavage avec le solvant et/ou on le soumet à un mélange intime par agitation.

6. Procédé selon l'une quelconque des revendications précédentes, **caractérisé en ce qu'**on utilise à titre de solvant (22) du trichloréthylène, du trichloroéthane, du n-hexane, de l'acétone, de l'éthylacétate, du toluène, du chlorure de méthylène et/ou un solvant préparé à partir de matières premières renouvelables, en particulier de l'acide caprylique, de l'ester méthylique ou de l'ester méthylique de l'acide octanoïque.

7. Procédé selon l'une quelconque des revendications précédentes, **caractérisé en ce que**, pour la mise en suspension des additifs, on purge le mélange matériau de construction-solvant en faisant passer un gaz à partir du bas, dans lequel on utilise de préférence de l'air pour faire office de gaz et dans lequel on soumet en outre de préférence le mélange matériau de construction-solvant, lors de la purge avec un gaz, à un mélange intime par agitation.

8. Procédé selon l'une quelconque des revendications précédentes, **caractérisé en ce qu'**on sèche les additifs après l'écrémage.

9. Dispositif (12) pour la séparation de substances solides minérales à partir de matériaux de construction bitumineux (10) qui contiennent des substances solides minérales, du bitume modifié par des additifs ainsi que des matières de charge, comprenant :
• au moins un premier et/ou un deuxième dispositif de lavage (14,174) pour le lavage du matériau de construction (10) dans un solvant (22), dans lequel on obtient un mélange matériau de construction-solvant, et ledit au moins un dispositif de lavage est réalisé d'une manière telle que l'on met en suspension les additifs lors du lavage du matériau de construction (10) avec le solvant (22) ou après ledit lavage, hors du solvant et/ou sur ce dernier ;
• un dispositif d'écrémage (128) destiné à l'écrémage des additifs mis en suspension par rapport au mélange substances solides-bitume-matières de charge-solvant qui subsiste, comprenant un élément d'écrémage (132) apte à effectuer des rotations autour d'un axe de rotation (130) du dispositif d'écrémage ;
• un premier dispositif de séparation (104) destiné à la séparation des substances solides minérales possédant une granulométrie qui est supérieure à une valeur granulométrique limite à partir du mélange matériau de construction-solvant, dans lequel on obtient un mélange bitume-matières de charge-solvant ;
• un deuxième dispositif de séparation (54) destiné à la séparation des matières de charge possédant une granulométrie qui est inférieure à une valeur granulométrique limite, à partir du mélange bitume-matières de charge-solvant ;
• un troisième dispositif de séparation (78) destiné à la séparation du bitume par rapport au mélange bitume-solvant qui subsiste, par évaporation du solvant (22) ; et
• un dispositif de récupération du solvant (66) destiné à la récupération et à une nouvelle fluidification du solvant (22) évaporé dans tous les mécanismes du dispositif (12) ;
• dans lequel le dispositif (12) est réalisé sous la forme d'un système fermé étanche pour le solvant (22).

10. Dispositif selon la revendication 9, **caractérisé en ce que** le premier dispositif de séparation (104) est réalisé sous la forme d'un dispositif de criblage (112).

11. Dispositif selon l'une quelconque des revendications 9 à 10, **caractérisé par** un dispositif d'évaporation par rotation (200) destiné à éliminer le solvant (22) à partir du mélange bitume-solvant séparé par l'intermédiaire du troisième dispositif de séparation (78), ledit dispositif d'évaporation par rotation (200) étant mis en liaison par fluide avec le troisième dispositif de séparation (78) et avec le dispositif (66) de récupération du solvant.

12. Dispositif (12) selon l'une quelconque des revendications 9 à 11, **caractérisé en ce que** l'axe de rotation (130) du dispositif d'écrémage s'étend parallèlement à la direction suivie par la pesanteur (120).

13. Dispositif (12) selon l'une quelconque des revendications 9 à 12, **caractérisé en ce que** le dispositif d'écrémage (128) comprend une commande (134) destinée à la mise en rotation de l'élément d'écrémage (132).

14. Dispositif (12) selon l'une quelconque des revendications 9 à 13, **caractérisé en ce que** l'élément d'écrémage (132) comprend une paroi d'écrémage (168) enroulée en hélice, dans lequel la paroi d'écrémage est réalisée de préférence au moins en partie par l'intermédiaire d'un crible d'écrémage (170) et dans lequel la paroi d'écrémage (168) s'étend en outre de préférence en formant un angle périphérique d'au moins 360°.

15. Dispositif (12) selon la revendication 14, **caractérisé en ce que** l'élément d'écrémage (132) comprend un manchon interne (156) et un manchon externe (154) qui sont disposés respectivement en position concentrique par rapport à l'axe de rotation (130) du dispositif d'écrémage et qui présentent respectivement une rainure (160, 164) ouverte sur respectivement l'autre manchon (154, 156) pour que viennent s'y loger le bord interne et le bord externe d'une paroi d'écrémage (168).
